# EUROPEAN PATENT APPLICATION

(11) **EP 2 243 677 A1**
(43) Date of publication of application: **27.10.2010**
(21) Application number: 09711735.2
(22) Date of filing: 17.02.2009
(51) Int. Cl.: B61C 9/46, F16H 1/32

(54) **RAILWAY ROLLING STOCK DRIVE UNIT**

(30) Priority: 18.02.2008 JP 2008035939; 26.12.2008 JP 2008335034; 26.12.2008 JP 2008335036; 26.12.2008 JP 2008335037
(71) Applicant: NTN Corporation, Osaka-shi, Osaka 550-0003 (JP)
(72) Inventor: MIKI, Daisuke, Kuwana-shi Mie 511-0811 (JP); KATAOKA, Yukihiro, Kuwana-shi Mie 511-0811 (JP); ADACHI, Takaya, Kuwana-shi Mie 511-0811 (JP); YAMADA, Masahiro, Kuwana-shi Mie 511-0811 (JP); TAMADA, Kenji, Kuwana-shi Mie 511-0811 (JP)
(74) Representative: Grosse, Felix Christopher
(86) International application number: PCT/JP2009/052678
(87) International publication number: WO 2009/104593

(57) **Abstract**

A railway vehicle drive unit (12) is a drive unit to rotatably drive a wheel of a railway vehicle. More specifically, it includes a reducer housing (13) held on an inner diameter surface of a wheel (11), and integrally rotating with the wheel (11), an input side rotation member (14) having eccentric parts (16a) and (16b), and connected to a drive source, revolution members (17) and (18) supported by the eccentric parts (17) and (18) in a relatively rotatable manner, to execute revolution motion around a rotation axis of the input side rotation member (14), a rotation regulation member (119) to prevent rotation motion of the revolution member, allowing the revolution motion thereof, and a periphery engagement member (20) fixed to the reducer housing (13), to rotate the reducer housing (13) at speed reduced with respect to the input side rotation member (14) by engaging with a periphery of the revolution members (17) and (18).

## Description

### TECHNICAL FIELD

The present invention relates to a railway vehicle drive unit and more particularly, to a railway vehicle drive unit capable of driving right and left wheels independently.

### BACKGROUND ART

A conventional railway vehicle drive unit is disclosed in Japanese Unexamined Patent Publication No. 2007-230508, for example. The railway vehicle drive unit disclosed in this document includes a motor, and a reducer to reduce rotation speed of the motor and transmit it to a wheel.

In this railway vehicle drive unit, a cycloidal reducer which is compact in size and implements a high reduction ratio is used to generate torque required to run a railway vehicle, and to provide a large passenger compartment space. More specifically, it is composed of an input shaft integrally rotating with the motor, a curved plate rotatably supported by an eccentric part provided in the input shaft, an outer pin to generate rotation motion of the curved plate by engaging with a periphery of the curved plate, and an inner pin to convert the rotation motion of the curved plate to revolution motion and transfer it to the wheel.

A radial load due to a weight of a railway vehicle body itself, and a axial load due to centrifugal force at the time of rotation are applied to the wheel of the railway vehicle. Here, in the above railway vehicle drive unit, the reducer is largely apart from the gravity center position of the wheel, so that a high moment load is applied from the wheel to the reducer, which prevents smooth rotation of the reducer and lowers durability of the railway vehicle drive unit.

### DISCLOSURE OF THE INVENTION

It is an object of the present invention to provide a compact railway vehicle drive unit having a high reduction ratio with high reliability.

It is another object of the present invention to provide a compact railway vehicle drive unit having a high reduction ratio, and improved lubrication performance with higher reliability.

It is still another object of the present invention to provide a compact railway vehicle drive unit having a high reduction ratio, and improved lubrication performance with higher reliability.

A railway vehicle drive unit according to the present invention is a drive unit to rotatably drive a wheel of a railway vehicle. More specifically, the railway vehicle drive unit includes a reducer housing held on an inner diameter surface of the wheel, and integrally rotating with the wheel, an input side rotation member having an eccentric part, and connected to a drive source, a revolution member supported by the eccentric part in a relatively rotatable manner, to execute revolution motion around a rotation axis of the input side rotation member, a rotation regulation member to prevent rotation motion of the revolution member, allowing the revolution motion thereof, and a periphery engagement member fixed to the reducer housing, to rotate the reducer housing at speed reduced with respect to the input side rotation member by engaging with a periphery of the revolution member. A cycloidal reducer is composed of the input side rotation member, the revolution member, the rotation regulation member, and the periphery engagement member.

The size can be reduced and a high reduction ratio can be implemented by employing the cycloidal reducer. In addition; since the wheel is fitted and fixed to an outer diameter surface of the reducer housing, the gravity center of the wheel can be arranged in an appropriate position. As a result, the railway vehicle drive unit can be high in reliability.

Preferably, the drive unit further includes a balance adjusting mechanism to absorb an unbalance load generated due to eccentric motion of the eccentric part. Thus, torque can be stably transmitted to the wheel.

As one embodiment, the balance adjusting mechanism includes first and second eccentric parts arranged with their phases shifted to each other so as to offset centrifugal force due to the eccentric motion. As another embodiment, the balance adjusting mechanism includes a counterweight fitted and fixed to the input side rotation member with a phase shifted so as to offset unbalance inertia coupling due to eccentric motion of the revolution member.

Preferably, the drive unit further includes a fixed member arranged in the reducer housing, and connected and fixed to a vehicle body, and first and second axle bearings to rotatably support the reducer housing with respect to the fixed member on one axial side and the other axial side of a fit position of the wheel. Further preferably, the first and second axle bearings each is a tapered roller bearing including an inner ring fixed to an outer diameter surface of the fixed member, an outer ring fixed to an inner diameter surface of the reducer housing, and a plurality of tapered rollers arranged between the inner ring and the outer ring, and arranged such that their small diameter side ends are opposed to each other. The moment load applied to the wheel can be appropriately supported by using the tapered roller bearings having high load capacity and arranged back-to-back (DB).

As one embodiment, the revolution member has a plurality of waveforms composed of a trocoidal curve around its periphery. The periphery engagement member is composed of a plurality of outer pins to engage with the plurality of waveforms.

As one embodiment, the rotation regulation member is composed of a plurality of inner pins held by the fixed member and circumferentially arranged in fixed positions around a rotation axis of the input side rotation member. The revolution member has a plurality of holes each having a diameter larger than an outer diameter of the inner pin by a predetermined amount and receiving the inner pins.

According to the present invention, since the cycloidal.reducer is used, the size can be small and the high reduction ratio can be provided. In addition, since the wheel is fitted and fixed to the outer diameter surface of the reducer housing, the gravity center of the wheel can be arranged in an appropriate position. As a result, the railway vehicle drive unit can be high in reliability.

It is preferable that the drive unit further includes a fixed member arranged in the reducer housing, and fixed and connected to a vehicle body, and the revolution member has a radially extending oil path.

Thus, since the revolution member is provided with the oil path, the lubricant oil can be easily supplied to each part of the railway vehicle drive unit through the oil path. As a result, the lubrication performance can be improved.

Preferably, the rotation regulation member is composed of a plurality of inner pins held by the fixed member and circumferentially arranged in fixed positions around a rotation axis of the input side rotation member, the revolution member has a plurality of holes each having a diameter larger than an outer diameter of the inner pin by a predetermined amount, and receiving the inner pins, and the oil path is provided so as to pass through the hole. Thus, the lubricant oil can be actively supplied to the contact part between the revolution member and the inner pin.

More preferably, the revolution member has a plurality of waveforms composed of a trocoidal curve around its periphery, and an end of the oil path on the radial outer side is positioned in a valley part of the waveform. Thus, the revolution member and the periphery engagement member are prevented from being damaged when they engage with each other.

Further preferably, the revolution member further has a lubricant oil holding space to hold a lubricant oil temporarily, in the middle of the oil path. Thus, the lubricant oil is held in the revolution member while the lubricant oil is sufficiently supplied, and the lubricant oil held in the lubricant oil holding space can be discharged to the oil path when the supply amount of the lubricant oil decreases. As a result, the lubricant oil can be more stably supplied.

Further preferably, a diameter of an opening part of the oil path at a radial inner side end is different from a diameter of an opening part thereof at a radial outer side end. Thus, the opening part can be increased based on the supply direction of the lubricant oil, so that the lubricant oil can be easily supplied to the oil path.

As one embodiment, the drive unit further includes an axis oil path axially extending in the input side rotation member, a lubricant oil supply port extending from the axis oil path toward an outer diameter surface of the input side rotation member, a lubricant oil discharge port provided in the fixed member, and a circulation oil path connecting the lubricant oil discharge port and the axis oil path, to return the lubricant oil discharged from the lubricant oil discharge port to the axis oil path. Thus, the lubricant oil can be supplied from the input, side rotation member, and the lubricant oil shortage due to centrifugal force at the time of rotation can be eliminated in the vicinity of the input side rotation member, so that the lubrication performance can be further improved.

As another embodiment, the reducer housing has a space sealed with a lubricant oil, and the reducing mechanism is arranged in the space in such a manner that at least one part of it is soaked in the lubricant oil.

It is preferable that the railway vehicle drive unit further includes a fixed member arranged in the reducer housing, and fixed and connected to a vehicle body, and at least one of the rotation regulation member and the periphery engagement member is rotatably supported by a bearing in a contact position with the revolution member, and the bearing has a radially penetrating through hole.

Thus, since the bearing mounted on at least one of the rotation regulation member and the periphery engagement member has the through hole, the lubricant oil can be easily supplied to each part of the railway vehicle drive unit, such as the contact part with the revolution member through the through hole. As a result, the lubrication performance can be improved.

Preferably, the through hole is provided in a contact position with the revolution member. Thus, the lubricant oil can be actively supplied to the contact part between the revolution member and the bearing.

As one embodiment, the eccentric part includes first and second eccentric parts arranged in the input side rotation member with their phases shifted to offset centrifugal force due to eccentric motion, and the revolution member includes first and second revolution members rotatably held by the first and second eccentric parts, respectively.

Preferably, the bearing extends so as to abut on both of the first and second revolution members, and the through hole is provided in a position between the first and second revolution members. Thus, the lubricant oil can be easily supplied to the through hole.

Further preferably, at least one of the rotation regulation member and the periphery engagement member internally has a lubricant oil holding space, and a through hole radially extending from the lubricant oil holding space. Thus, the lubricant oil supplied through the through hole is held in the lubricant oil holding space while the lubricant oil is sufficiently supplied, and the lubricant oil held in the lubricant oil holding space can be discharged to the oil path through the through hole when the supply amount of the lubricant oil decreases. As a result, the lubricant oil can be more stably supplied.

Further preferably, the revolution member has a radially extending oil path. Thus, the lubricant oil can be supplied to each part of the railway vehicle drive unit through the oil path. As a result, the lubrication performance can be more improved.

As one embodiment, the drive unit further includes an axis oil path axially extending in the input side rotation member, a lubricant oil supply port extending from the axis oil path toward an outer diameter surface of the input side rotation member, a lubricant oil discharge port provided in the fixed member, and a circulation oil path connecting the lubricant oil discharge port and the axis oil path, to return the lubricant oil discharged from the lubricant oil discharge port to the axis oil path. Thus, the lubricant oil can be supplied from the input side rotation member, and the lubricant oil shortage due to centrifugal force at the time of rotation can be eliminated in the vicinity of the input side rotation member, so that the lubrication performance can be further improved.

As another embodiment, the reducer housing has a space sealed with a lubricant oil, and the reducing mechanism is arranged in the space in such a manner that at least one part of it is soaked in the lubricant oil.

In addition, it is preferable that the railway vehicle drive unit further includes a fixed member arranged in the reducer housing, and fixed and connected to a vehicle body, at least one of the rotation regulation member and the periphery engagement member internally has a lubricant oil holding space, and a through hole radially extending from the lubricant oil holding space.

Thus, since the through hole and the lubricant oil holding space are provided, the lubricant oil supplied through the through hole is held in the lubricant oil holding space while the lubricant oil is sufficiently supplied, and the lubricant oil held in the lubricant oil holding space can be discharged through the oil path when the supply amount of the lubricant oil decreases. As a result, the lubricant oil can be more stably supplied.

Preferably, the oil holding space stores a porous material impregnated with the lubricant oil. Thus, since the lubricant oil gradually conies through the through hole, the lubricant oil can be stably supplied for a long period of time.

As one embodiment, the porous material includes either one of sintered metal and foamed grease.

Further preferably, the revolution member has a radially extending oil path. Thus, the lubricant oil can be supplied to each part of the railway vehicle drive unit through the oil path. As a result, the lubrication performance can be more improved.

Further preferably, the rotation regulation member and the periphery engagement member are each rotatably supported by a bearing in a contact position with the revolution member, and at least one of the revolution member and the bearing is made of sintered metal. Thus, the lubricant oil is held in sopped state while the lubricant oil is sufficiently supplied, and the sopped lubricant oil gradually comes out when the supply amount of the lubricant oil decreases. As a result, the lubricant oil can be more stably supplied for a long period of time.

As one embodiment, the drive unit further includes an axis oil path axially extending in the input side rotation member, a lubricant oil supply port extending from the axis oil path toward an outer diameter surface of the input side rotation member, a lubricant oil discharge port provided in the fixed member, and a circulation oil path connecting the lubricant oil discharge port and the axis oil path, to return the lubricant oil discharged from the lubricant oil discharge port to the axis oil path. Thus, the lubricant oil is supplied from the input side rotation member, and the lubricant oil shortage due to centrifugal force at the time of rotation can be eliminated in the vicinity of the input side rotation member, so that the lubrication performance can be further improved.

As another embodiment, the reducer housing has a space sealed with a lubricant oil, and the reducing mechanism is arranged in the space in such a manner that at least one part of it is soaked in the lubricant oil.

### BRIEF DESCRIPTION OF DRAWINGS

Fig. 1 is a view showing a railway vehicle wheel drive device according to one embodiment of the present invention.
Fig. 2 is a cross-sectional view taken along a line II-II in Fig. 1.
Fig. 3 is an enlarged view showing the vicinity of an eccentric part in Fig. 1.
Fig. 4 is a view showing a railway vehicle wheel drive device according to a second embodiment of the present invention.
Fig. 5 is a cross-sectional view taken along a line V-V in Fig. 4.
Fig. 6 is an enlarged view showing the vicinity of an eccentric part in Fig. 4.
Fig. 7 is an enlarged view showing the vicinity of a both-sided inner pin.
Fig. 8 is an enlarged view showing the vicinity of a one-sided inner pin.
Fig. 9 is a view showing a railway vehicle wheel drive device according to another embodiment of the present invention.
Fig. 10 is a cross-sectional view taken along a line X-X in Fig. 9.
Fig. 11 is a view showing an example in which a through hole is provided in a contact position with a curved plate.
Fig. 12 shows one example of a lubricant oil transferring mechanism.
Fig. 13 shows another example of a lubricant oil transferring mechanism.
Fig. 14 shows still another example of a lubricant oil transferring mechanism.
Fig. 15 is a view showing a balance weight provided with a lubricant oil transferring mechanism.
Fig. 16 is a view showing a railway vehicle wheel drive device according to still another embodiment of the present invention.
Fig. 17 is a cross-sectional view taken along a line XVII-XVII in Fig. 16.
Fig. 18 is an enlarged view of an axle bearing.
Fig. 19 is a front view of a seal member.

### BEST MODE FOR CARRYING OUT THE INVENTION

### (1) First embodiment

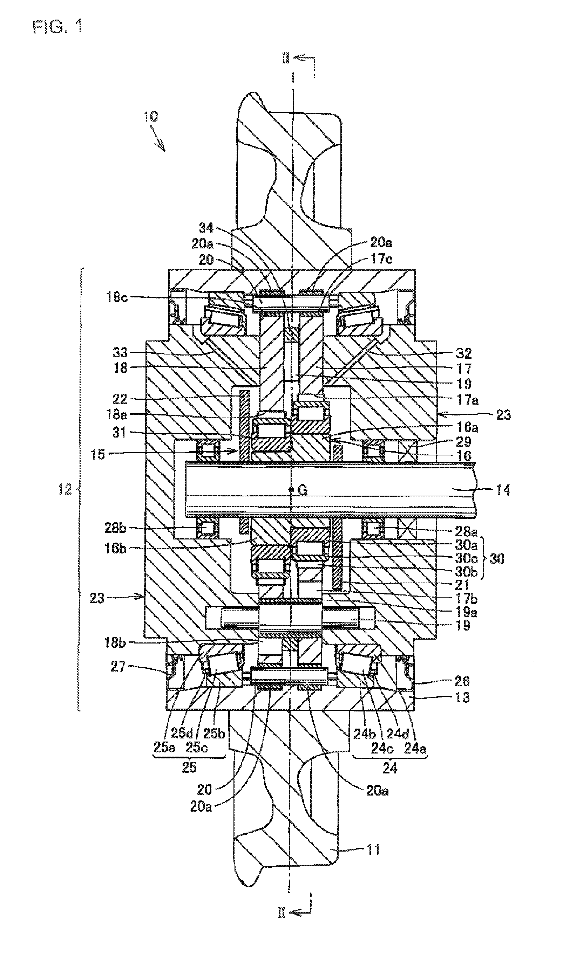

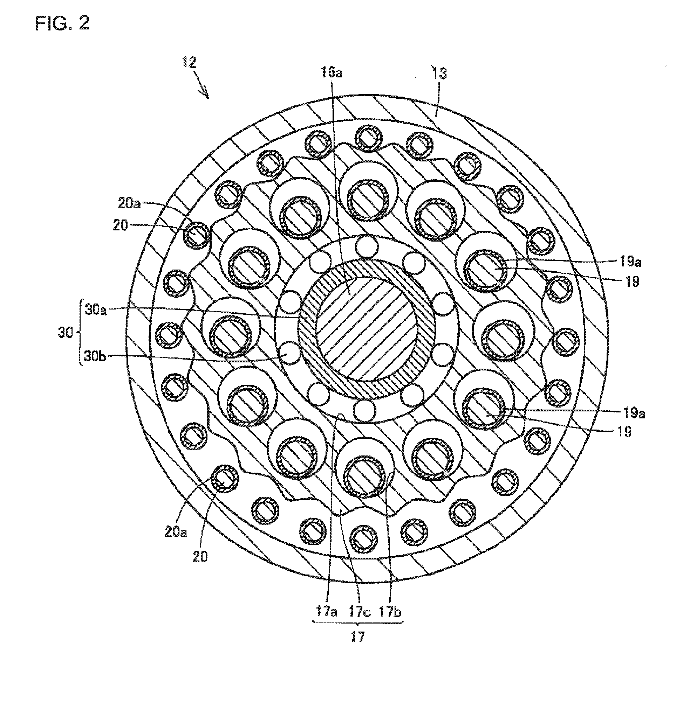

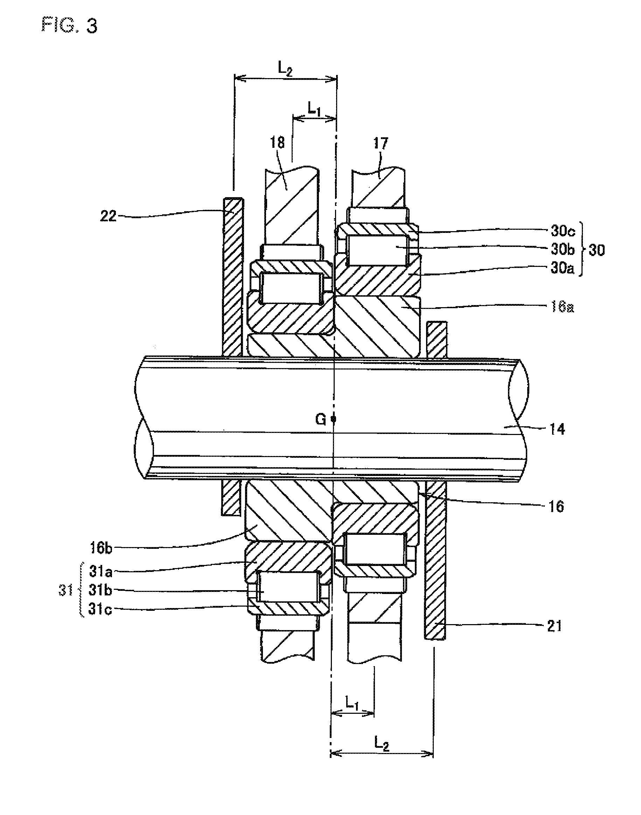

A description will be made of a railway vehicle drive unit 12 according to one embodiment of the present invention and a railway vehicle wheel drive device 10 including the railway vehicle drive unit 12, with reference to Figs. 1 to 3. In addition, Fig. 1 is a schematic cross-sectional view of the railway vehicle wheel drive device 10, Fig. 2 is a cross-sectional view taken along a line II-II in Fig 1, and Fig. 3 is an enlarged view showing the vicinity of eccentric parts 16a and 16b.

First, referring to Fig. 1, the railway vehicle wheel drive device 10 is composed of a railway vehicle wheel 11 (hereinafter, referred to as "the wheel 11" ) and the drive unit 12 (hereinafter, referred to as "the railway vehicle drive unit 12" ) held on an inner diameter surface of the wheel 11 to reduce rotation speed of a drive source (not shown) and transmit it to the wheel 11, and arranged in a lower part of a railway vehicle body (not shown.

The railway vehicle drive unit 12 is mainly composed of a reducer housing 13, an input side rotation member 14, a reducing mechanism 15, a carrier 23 serving as a fixed member, and first and second axle bearings 24 and 25.

The reducer housing 13 is held on the inner diameter surface of the wheel 11, and holds the reducing mechanism 15 internally. In addition, the reducing mechanism 15 is composed of an eccentric member 16, curved plates 17 and 18 serving as revolution members, a plurality of inner pins 19 serving as rotation regulation members, a plurality of outer pins 20 serving as periphery engagement members, and members associated with the above components, and reduces rotation speed of the input side rotation member 14 and transmits it to the reducer housing 13.

In addition, the first and second axle bearings 24 and 25 are arranged between an inner diameter surface of the reducer housing 13 and an outer diameter surface of the carrier 23. The reducer housing 13 is rotatable with respect to the carrier 23, and also functions as an output side rotation member (axle) integrally rotating with the wheel 11.

The first axle bearing 24 is a tapered roller bearing including an inner ring 24a fixed to the outer diameter surface of the carrier 23, an outer ring 24b fixed to the inner diameter surface of the reducer housing 13, a plurality of tapered rollers 24c arranged between the inner ring 24a and the outer ring 24b, a retainer 24d retaining an interval of the adjacent tapered rollers 24c. Since the second rolling bearing 25 has the same configuration, its description is not reiterated. When the tapered roller bearing having high load capacity is used as the first and second axle bearings 24 and 25, a radial load and an axial load applied to the wheel 11 can be appropriately supported.

In addition, the first axle bearing 24 and the second axle bearing 25 rotatably support the reducer housing 13 with respect to the carrier 23 on one axial side (right side in Fig. 1) of a fit position (more specifically, "a fit width center of the wheel 11" shown by a dashed line in Fig. 1) of the wheel 11 and on the other axial side (left side in Fig. 1) of the fit position thereof, respectively. According to this embodiment, distances (offsets) of the first axle bearing 24 and the second axle bearing 25 from the fit width center of the wheel 11 are set to be equal to each other.

Furthermore, the first and second axle bearings 24 and 25 are arranged such that their small diameter side ends are opposed to each other (back-to-back coupling). Thus, a moment load applied to the wheel 11 can be appropriately supported.

In addition, seal members 26 and 27 to seal a lubricant oil in the reducer housing 13 are provided at both axial ends of the reducer housing 13. The seal members 26 and 27 each have lip parts being in sliding contact with the outer diameter surface of the carrier 23, and are fixed to the inner diameter surface of the reducer housing 13, and integrally rotate with the reducer housing 13.

The input side rotation member 14 is connected to the drive source (such as a motor), and rotates with the rotation of the drive source. In addition, its both sides are supported by rolling bearings 28a and 28b on both sides of the curved plates 17 and 18, and rotatably held with respect to the carrier 23. In addition, according to this embodiment, a cylindrical roller bearing is used as each of the rolling bearings 28a and 28b. In addition, a seal member 29 to seal the lubricant oil in the reducer housing 13 is arranged on the outer side (right side in Fig. 1) of the rolling bearing 28a.

The eccentric member 16 has the first and second eccentric parts 16a and 16b, and is fitted and fixed to the input side rotation member 14. The first and second eccentric parts 16a and 16b are arranged so as to offset the centrifugal force due to eccentric motion to each other, that is, their phases are shifted by 180°. Consequently, the first and second eccentric parts 16a and 16b also function as balance adjusting mechanisms to absorb unbalance load generated due to the eccentric motion.

The curved plate 17 is supported by a rolling bearing 30 so as to be relatively rotatable with respect to the first eccentric part 16a, and executes revolution motion around a rotation axis of the input side rotation member 14. In addition, referring to Fig, 2, the curved plate 17 has first and second through holes 17a and 17b penetrating in a thickness direction, and a plurality of waveforms 17c composed of a trochoid-based curve such as epitrochoid along its periphery.

The first through hole 17a is formed in the center of the curved plate 17, and receives the first eccentric part 16a and the rolling bearing 30. The second through holes 17b are circumferentially provided around a rotation axis of the curved plate 17 at regular intervals, and receive the inner pins 19 held by the carrier 23. The waveforms 17c engage with the outer pins 20 held by the reducer housing 13, and transmit the rotation of the curved plate 17 to the reducer housing 13. In addition, the curved plate 18 has the same configuration, and is rotatably supported by a rolling bearing 31 with respect to the second eccentric part 16b.

The rolling bearing 30 is a cylindrical roller bearing provided with an inner ring member 30a fitted to an outer diameter surface of the eccentric part 16a and having an inner side track surface on its outer diameter surface, an outer side track surface directly formed on the inner diameter surface of the through hole 17a of the curved plate 17, a plurality of cylindrical rollers 30b arranged between the inner side track surface and the outer side track surface, and a retainer 30c retaining an interval of the adjacent cylindrical rollers 30b. Since the rolling bearing 31 has the same configuration, its description is not reiterated.

In addition, when it is assumed that a center point of the two curved plates 17 and 18 is G, the center point G coincides with a gravity center position of the wheel 11, but the center point G and the wheel gravity center position are preferably offset in order to minimize the moment load applied from the wheel 11 to the railway vehicle drive unit 12. Thus, the components (such as the curved plates 17 and 18, the inner pin 19, and outer pin 20) are inclined to prevent an excessive load from being generated in a contact part. As a result, the railway vehicle drive unit 12 smoothly rotates, and its durability is improved.

In addition, a circumscribed ring 34 which circumscribes the plurality of inner pins 19 is arranged between the two curved plates 17 and 18. Thus, an axial motion amount of each of the curved plates 17 and 18 is regulated. In addition, since the curved plates 17 and 18 are sliding contact with the circumscribed ring 34, it is preferable that their wall surfaces to be in contact with each other are subjected to a grinding treatment. In addition, a function of the circumscribed ring 34 may be replaced with an inscribed ring inscribing the plurality of inner pins 19, or an inscribed ring inscribing the plurality of outer pins 20.

The inner pins 19 are circumferentially provided around the rotation axis of the input side rotation member 14 at regular intervals. Some of the plurality of inner pins 19 are roughly in the shape of a column having a large diameter part in the center and a small diameter part having a diameter relatively smaller than that of the large diameter part, at each end. Thus, the small diameter part is held by the carrier 23, and the large diameter part is positioned in the second through holes 17b and 18b of the curved plates 17 and 18. In addition, an end face of the large diameter part abuts on a wall surface of the carrier 23 to function as a reference surface to position the inner pin 19. In addition, the other inner pins 19 are in the shape of a simple column having the same diameter in a longitudinal direction.

Furthermore, an inner pin collar 19a is attached to a position (large diameter part) which abuts on inner wall surfaces of the second through holes 17b and 18b of the curved plates 17 and 18. Thus, frictional resistance between the curved plates 17 and 18 and the inner pin 19 can be reduced. In addition, the inner pin collar 19a according to this embodiment is a sliding bearing.

In addition, diameters of the second through holes 17b and 18b are set to be larger by a predetermined amount than a diameter (a maximum outer diameter including the inner pin collar 19a) of the inner pin 19. Thus, when the curved plates 17 and 18 try to rotate with the rotation of the input side rotation member 14, the inner pin 19 functions as the rotation regulation member to stop rotation motion of the curved plates, while allowing the revolution motion thereof.

The outer pins 20 are circumferentially provided around the rotation axis of the input side rotation member 14 at regular intervals. A center part of the outer pin 20 is held by the reducer housing, and both ends thereof abut on the axle bearings 24 and 25 and fixed thereto. Thus, the outer pin 20 engages with the waveforms 17c and 18c of the curved plates 17 and 18 to rotate the reducer housing 13 at speed reduced with respect to the input side rotation member 14. Here, the input side rotation member 14, the curved plates 17 and 18, the inner pin 19, and the outer pin 20 constitute a cycloidal reducer.

Furthermore, an outer pin collar 20a is attached to a position which abuts on the waveforms 17c and 18c of the curved plates 17 and 18. Thus, frictional resistance between the curved plates 17 and 18 and the outer pin 20 can be reduced. In addition, the outer pin collar 20a according to this embodiment is a sliding bearing.

A counterweight 21 has a through hole to receive the input side rotation member 14, at a position other than its gravity center, and fitted and fixed to the input side rotation member 14 with its phase shifted so as to offset unbalance inertia couple due to the eccentric motion of the eccentric part 16a, that it, shifted by 180° from that of the eccentric part 16a. Consequently, the counterweight 21 functions as a balance adjusting mechanism to absorb an unbalance load generated due to the eccentric motion of the eccentric part 16a. In addition, a counterweight 22 has the same configuration, and is fitted and fixed to the input side rotation member 14 with its phase shifted to offset unbalance inertia couple due to eccentric motion of the eccentric part 16b.

Referring to Fig. 3, regarding the right side of the center point G of the two curved plates 17 and 18, a relationship that L₁ × m₁ × ε₁ = L₂ × m₂ × ε₂ is satisfied wherein L₁ represents a distance between the center point G and a center of the curved plate 17, m₁ represents a sum of the mass of the curved plate 17, the rolling bearing 30, and the eccentric part 16a, ε₁ represents an eccentric amount of the gravity center of the curved plate 17 from the rotation axis, L₂ represents a distance between the center point G and the counterweight 21, m₂ represents the mass of the counterweight 21, and ε₂ represents an eccentric amount of the gravity center of the counterweight 21 from the rotation axis. In addition, the same relationship is satisfied between the curved plate 18 and the counterweight 22 on the left side of the center point G in Fig. 3.

The carrier 23 is connected and fixed to the railway vehicle body, and holds the inner pin 19 in wall surfaces opposed to the curved plates 17 and 18, and rotatably supports each of the reducer housing 13 with the first and second axle bearings 24 and 25 fitted and fixed to its outer diameter surface, and the input side rotation member 14 with the rolling bearings 28a and 28b fitted and fixed to its inner diameter surface.

In addition, the carrier 23 is provided with a lubricant oil circulating mechanism to circulate the lubricant oil between the reducing mechanism 15 and the axle bearings 24 and 25. This lubricant oil circulating mechanism circulates the lubricant oil by use of the centrifugal force generated due to the rotation of the input side rotation member 14. More specifically, a plurality of lubricant oil paths 32 and 33 are formed so as to penetrate the inside of the carrier 23 in a diameter direction to circulate the lubricant oil from the radial outer side to the radial inner side.

An opening part of the lubricant oil path 32 on the radial outer side is provided between a large diameter side end of the first axle bearing 24 and the seal member 26. Similarly, an opening part of the lubricant oil path 33 on the radial outer side is provided between a large diameter side end of the second axle bearing 25 and the seal member 27. The lubricant oil in the tapered roller bearings 24 and 25 is discharged from the large diameter side end by the centrifugal force. Thus, it is preferable that the opening parts of the lubricant oil paths 32 and 33 on the radial outer side are provided in positions adjacent to the large diameter side ends of the first and second axle bearings 24 and 25, respectively.

Meanwhile, an opening part of the lubricant oil path 32 on the radial inner side is provided in a position opposed to the eccentric part 16a. Similarly, an opening part of the lubricant oil path 32 on the radial inner side is provided in a position opposed to the eccentric part 16b. Since the input side rotation member 14 rotates at high speed, a lot of lubricant oil is needed in the vicinity of the eccentric parts 16a and 16b, or more specifically, in the rolling bearings 30 and 31. Thus, it is preferable that the opening parts of the lubricant oil paths 32 and 33 on the radial inner side are provided in the positions opposed to the eccentric parts 16a and 16b, respectively.

A detailed description will be made of an operating principle of the railway vehicle drive unit 12 having the above configuration.

First, the input side rotation member 14 and the eccentric member 16 integrally rotate with the rotation of the drive source. At this time, while the curved plates 17 and 18 also try to rotate, their rotation motion is stopped by the inner pins 19 penetrating the second through holes 17b and 18b, so that they only execute the revolution motion. That is, the curved plates 17 and 18 shift in parallel on the circumferential track around the rotation axis of the input side rotation member 14.

When the curved plates 17 and 18 execute the revolution motion, the waveforms 17c and 18c engage with the outer pins 20, and the reducer housing 13 and the wheel 11 integrally rotate in the same direction as that of the input side rotation member 14. At this time, the rotation speed transmitted from the curved plates 17 and 18 to the reducer housing 13 has been reduced and torque is high.

More specifically, a reduction ratio of the railway vehicle drive unit 12 is calculated by a formula Z_{B}/(Z_{A}-Z_{B}) wherein Z_{A} represents the number of the outer pins 20, and Z_{B} represents the number of the waveforms of the curved plates 17 and 18, and a speed ratio in this embodiment shown in Fig. 1 is calculated by a formula 1/(n+1) wherein n represents the reduction ratio. Since Z_{A} = 24 and Z_{B} = 22 in the embodiment shown in Fig. 2, the reduction ratio is 11, and the speed ratio is 1/12. Therefore, even when a low-torque high-rotation type drive source is used, the torque required for the wheel 11 can be transmitted.

Thus, by employing the reducing mechanism 15 capable of obtaining the high reduction ratio without needing a multistage configuration, the railway vehicle drive unit 12 can be compact in size and implement the high reduction ratio. In addition, by providing the collars 19a and 20a for the inner pin 19 and outer pin 20 in the positions, respectively which abut on the curved plates 17 and 18, the frictional resistance in the contact parts is reduced. As a result, transmission efficiency is improved in the railway vehicle drive unit 12.

Next, a detailed description will be made of a flow of the lubricant oil in the railway vehicle drive unit 12 having the above configuration.

First, the lubricant oil is previously sealed in the reducer housing 13. The lubricant oil is carried to the radial outer side by the centrifugal force generated due to the rotation of the input side rotation member 14. At this time, it is supplied to the rolling bearings 28a, 28b, 30, and 31, portions between the curved plates 17, 18, and the rolling bearings 30, 31, between the curved plates 17, 18, and the inner pin 19, between the inner pin 19 and the inner pin collar 19a, between the curved plates 17, 18, and the circumscribed ring 34, between the curved plates 17, 18, and the outer pin 20, and between the outer pin 20 and the outer pin collar 20a.

Furthermore, the lubricant oil is discharged from the small diameter side ends of the first and second axle bearings 24 and 25 to the large diameter side ends thereof through inside of the bearing. Thus, the lubricant oil reaches spaces sandwiched between the first and second axle bearings 24 and 25, and the seal members 26 and 27, respectively and returns around the input side rotation member 14 through the lubricant oil paths 32 and 33.

Thus, since the lubricant oil is circulated in the railway vehicle drive unit 12, the amount of the lubricant oil can be small. As a result, heat generation and torque loss are reduced in the railway vehicle drive unit 12, and the enough lubrication can be ensured in the high-speed rotation part (in the vicinity of the eccentric part 16). In addition, by circulating the lubricant oil by use of the centrifugal force generated due to the rotation of the input side rotation member 14, the unit can be compact in size as compared with the case where a circulation device is provided outside.

In addition, while the two curved plates 17 and 18 of the reducing mechanism 15 are provided with their phases shifted by 180° in the above embodiment, the number of the curved plates may be optionally set, and when three curved plates are provided, their phases are shifted by 120°, for example.

In addition, while the eccentric member 16 having the eccentric parts 16a and 16b is fitted and fixed to the input side rotation member 14 in the above embodiment, as another example, the eccentric parts 16a and 16b may be directly formed on the outer diameter surface of the input side rotation member 14.

Furthermore, the rolling bearings 24, 25, 28a, 28b, 30, and 31 in the above embodiment are not limited to the configurations shown in Fig. 1, and various kinds of bearings can be used such as a sliding bearing, cylindrical roller bearing, tapered roller bearing, needle roller bearing, self-aligning roller bearing, deep groove ball bearing, angular ball bearing, three point contact ball bearing, or four point contact ball bearing, regardless of whether the sliding bearing or the rolling bearing, regardless of whether a rolling body is the roller or ball, and regardless of whether a double row or single row.

In addition, while the collars 19a and 19b are the sliding bearings in the above embodiment, the rolling bearing may be used instead. In this case, it is preferable to use the needle roller with a view to reducing a size in a thickness direction.

### (2)second embodiment

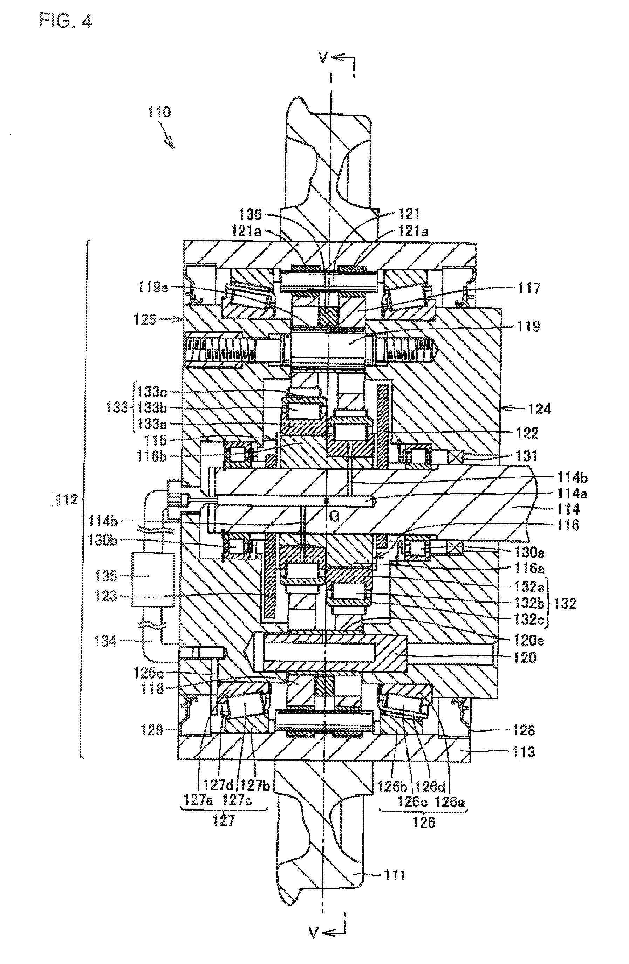

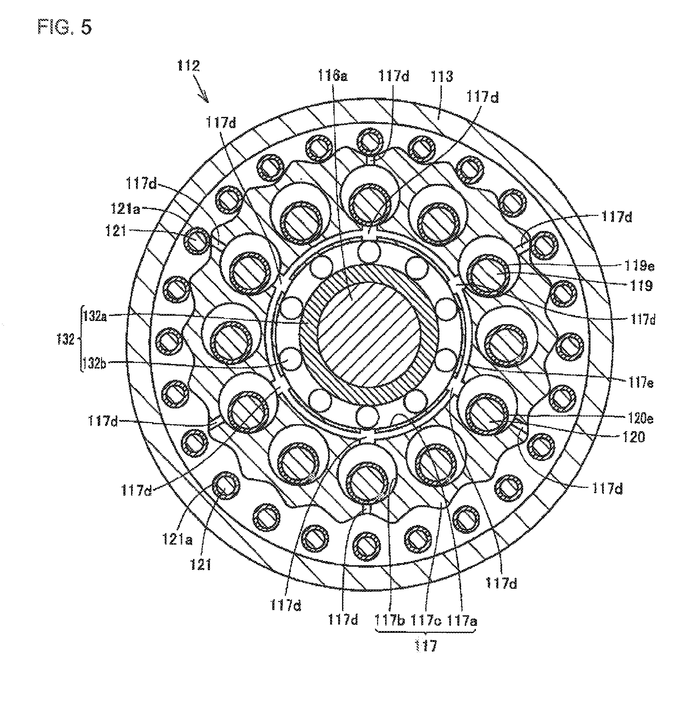

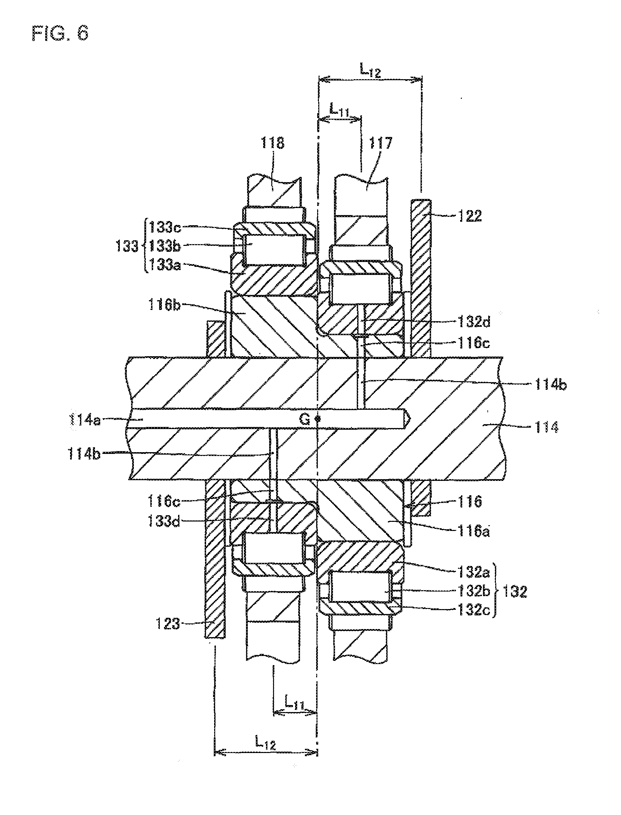

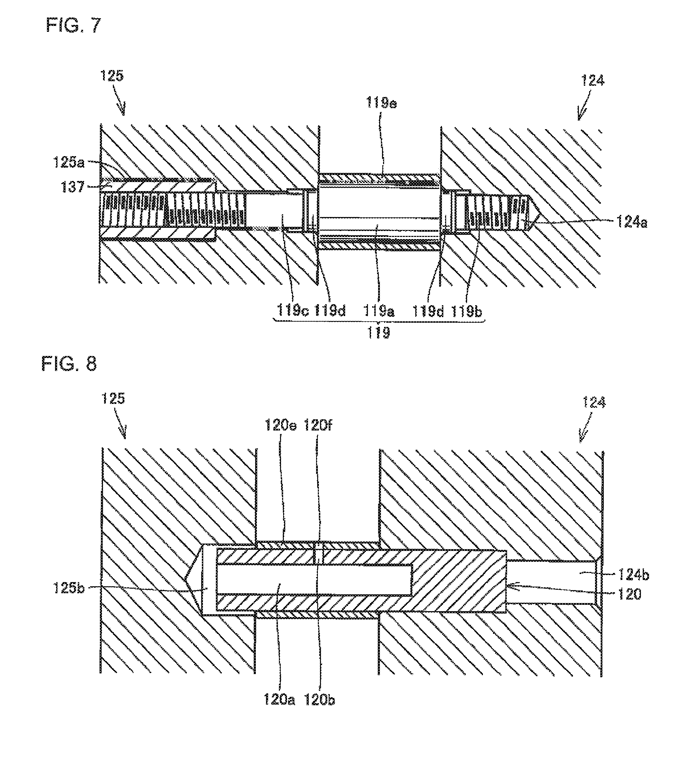

Next, a description will be made of a railway vehicle drive unit 112 according to a second embodiment of the present invention, and a railway vehicle wheel drive device 110 including the railway vehicle drive unit 112, with reference to Figs. 4 to 8. In addition, Fig. 4 is a schematic cross-sectional view of the railway vehicle wheel drive device 110 in this embodiment, Fig. 5 is a cross-sectional view taken along a line V-V in Fig 4, Fig. 6 is an enlarged view in the vicinity of eccentric parts 116a and 116b, Fig. 7 is an enlarged view of an inner pin 119, and Fig. 8 is an enlarged view of an inner pin 120.

First, referring to Fig. 4, the railway vehicle wheel drive device 110 is composed of a railway vehicle wheel 111 (hereinafter, referred to as "the wheel 111" ) and the drive unit 112 (hereinafter, referred to as "the railway vehicle drive unit 112" ) held on an inner diameter surface of the wheel 111 to reduce a rotation speed of a drive source (not shown) and transmits it to the wheel 111, and arranged in a lower part of a railway vehicle body (not shown) similar to the first embodiment.

The railway vehicle drive unit 112 is mainly composed of a reducer housing 113, an input side rotation member 114, a reducing mechanism 115, first and second carriers 124 and 125 serving as fixed members, first and second axle bearings 126 and 127, and a lubricant oil circulating mechanism to circulate a lubricant oil in the railway vehicle drive unit 112.

The reducer housing 113 is held on the inner diameter of the wheel 111, and holds the reducing mechanism 115 internally. In addition, the reducing mechanism 115 is composed of an eccentric member 116, curved plates 117 and 118 serving as revolution members, a plurality of inner pins 119 and 120 serving as rotation regulation members, a plurality of outer pins 121 serving as periphery engagement members, and members associated with the above components, and reduces rotation speed of the input side rotation member 114 and transmits it to the reducer housing 113.

In addition, the first and second axle bearings 126 and 127 are arranged between an inner diameter surface of the reducer housing 113 and an outer diameter surface of the first and second carriers 124 and 125. The reducer housing 113 is rotatable with respect to the first and second carriers 124 and 125, and also functions as an output side rotation member (axle) integrally rotating with the wheel 111.

The first axle bearing 126 is a tapered roller bearing including an inner ring 126a fixed to the outer diameter surface of the first carrier 124, an outer ring 126b fixed to the inner diameter surface of the reducer housing 113, a plurality of tapered rollers 126c arranged between the inner ring 126a and the outer ring 126b, a retainer 126d retaining an interval of the adjacent tapered rollers 126c. Since the second rolling bearing 127 has the same configuration, its description is not reiterated. When the tapered bearing having high load capacity is used as the first and second axle bearings 126 and 127, a radial load and an axial load applied to the wheel 111 can be appropriately supported.

In addition, the first axle bearing 126 and the second axle bearing 127 rotatably support the reducer housing 113 with respect to the first and second carriers 124 and 125 on one axial side (right side in Fig. 4) of a fit position (more specifically, "a fit width center of the wheel 111" shown by a dashed line in Fig. 4) of the wheel 111 and on the other axial side (left side in Fig. 1) of the fit position thereof, respectively. According to this embodiment, distances (offsets) of the first and second axle bearings 126 and 127 from the fit width center of the wheel 111 are set to be equal to each other.

Furthermore, the first and second axle bearings 126 and 127 are arranged such that their small diameter side ends are opposed to each other (back-to-back coupling). Thus, a moment load applied to the wheel 111 can be appropriately supported.

In addition, seal members 128 and 129 to seal the lubricant oil in the reducer housing 113 are provided at both axial ends of the reducer housing 113. The seal members 128 and 129 each have lip parts being in sliding contact with the outer diameter surfaces of the first and second carriers 124 and 125, respectively, and are fixed to the inner diameter surface of the reducer housing 113, and integrally rotate with the reducer housing 13.

The input side rotation member 114 is connected to the drive source (such as a motor), and rotates with the rotation of the drive source. In addition, its both sides are supported by rolling bearings 130a and 130b on both sides of the curved plates 117 and 118, and rotatably held with respect to the first and second carriers 124 and 125. In addition, according to this embodiment, a cylindrical roller bearing is used as each of the rolling bearings 130a and 130b. In addition, a seal member 131 to seal the lubricant oil in the reducer housing 113 is arranged on the outer side (right side in Fig. 4) of the rolling bearing 130a.

The eccentric member 116 has the first and second eccentric parts 116a and 116b, and is fitted and fixed to the input side rotation member 114. The first and second eccentric parts 116a and 116b are arranged so as to offset the centrifugal force due to eccentric motion to each other, that is, their phases are shifted by 180°. Consequently, the first and second eccentric parts 116a and 116b also function as a balance adjusting mechanism to absorb unbalance load generated due to the eccentric motion.

The curved plate 117 is supported by a rolling bearing 132 so as to be relatively rotatable with respect to the first eccentric part 116a. In addition, it executes revolution motion around a rotation axis of the input side rotation member 114. Referring to Fig. 5, the curved plate 117 has first and second through holes 117a and 117b penetrating in a thickness direction, a plurality of waveforms 117c composed of a trochoid-based curve such as epitrochoid along its periphery, an oil path 117d internally extending in a radial direction, and a lubricant oil holding space 117e to temporarily hold the lubricant oil in the middle of the oil path 117d.

The first through hole 117a is formed in the center of the curved plate 117, and receives the first eccentric part 116a and the rolling bearing 132. The second through holes 117b are circumferentially provided around a rotation axis of the curved plate 117 at regular intervals, and receive the inner pins 119 and 120 held by the first and second carriers 124 and 125. The waveforms 117c engage with the outer pins 121 held by the reducer housing 113, and transmit the rotation of the curved plate 117 to the reducer housing 113. In addition, the curved plate 118 has the same configuration, and is rotatably supported by a rolling bearing 133 with respect to the second eccentric part 116b. In addition, the curved plate 117 is a first revolution member, and the curved plate 118 is a second revolution member.

The oil path 117d extends from the first through hole 117a to a peripheral surface of the curved plate 117. In addition, while a position of the oil path 117d is not limited in particular, it is preferably provided so as to pass through the second through hole 117b as shown in Fig. 5. Thus, the lubricant oil can be actively supplied to a contact part between the curved plate 117 and the inner pins 119 and 120. In addition, an end of the oil path 117d on the radial outer side is preferably formed in a valley part of the waveform 117c. Thus, the curved plate 117 and the outer pin 121 are prevented from being damaged when they engage with each other.

In addition, the oil paths 117d are circumferentially provided at regular intervals. Thus, a lubricant oil supply amount can be increased. In addition, the oil path 117d extends straight in the radial direction. Therefore, the lubricant oil can be easily supplied in the radial direction. In addition, a diameter of an opening part of the oil path 117d at a radial inner side end is different from a diameter of an opening part thereof at a radial outer side end. More specifically, the diameter of the opening part of the oil path 117d at the radial inner side end is larger than the diameter of the opening part thereof at the radial outer side end.

In addition, since the lubricant oil holding space 117e branches from the oil path 117d, the lubricant oil can be held in the curved plate 117 while a sufficient amount of lubricant oil is supplied, and the lubricant oil held in the lubricant oil holding space 117e can be discharged to the oil path 117d when the supply amount of the lubricant oil decreases. Thus, the lubricant oil can be more stably supplied.

Furthermore, the lubricant oil holding space 117e is positioned in a region between the first through hole 117a and the second through hole 117b. In addition, the lubricant oil holding space 117e extends in a circumferential direction, and is provided so as to connect the oil path 117d and the oil path 117d which are provided in the circumferential direction at regular intervals. Thus, a stored amount of the lubricant oil can be increased. In addition, when a large amount of lubricant oil is discharged from one oil path 117d, it can be evenly supplied in the circumferential direction, through the other oil paths 117d.

The curved plate 117 may be made of a porous material such as sintered metal. In this case, even when the lubricant oil holding space 117e is not provided, the curved plate 117 can hold the lubricant oil in holes of the porous material. Therefore, the lubricant oil is stored in the curved plate 117 while a sufficient amount of lubricant oil is supplied, and the lubricant oil stored in the curved plate 117 comes out gradually when the supply amount of lubricant oil decreases, so that the lubricant oil can be stably supplied over a long period of time.

In addition, parts which abut on the other components in the curved plate 117 such as an inner wall surface of the first through hole 117a which abuts on the rolling bearing 132, an inner wall surface of the second through hole 117b which abuts on the inner pins 119 and 120, and a periphery surface of the curved plate 117 which abuts on the outer pin 121 may be subjected to a HL (High Lubrication) treatment. In addition, the HL treatment is a treatment to form numerous fine recessed dents in the surface at random. Thus, the lubricant oil can be stored in the dents, so that an oil film is appropriately prevented from being cut in the abutment part.

The rolling bearing 132 is a cylindrical roller bearing provided with an inner ring member 132a fitted to an outer diameter surface of the eccentric part 116a and having an inner side track surface on its outer diameter surface, an outer side track surface directly formed on an inner diameter surface of the through hole 117a of the curved plate 117, a plurality of cylindrical rollers 132b arranged between the inner side track surface and the outer side track surface, and a retainer 132c retaining an interval of the adjacent cylindrical rollers 132b. Since the rolling bearing 133 has the same configuration, its description is not reiterated.

In addition, when it is assumed that a center point of the two curved plates 117 and 118 is G, the center point G coincides with a gravity center position of the wheel 111, but the center point G and the wheel gravity center position are preferably offset in order to minimize the moment load applied from the wheel 111 to the railway vehicle drive unit 112. Thus, the components (such as the curved plates 117 and 118, the inner pins 119 and 120, and the outer pin 121) are inclined to prevent an excessive load from being generated in the contact part. As a result, the railway vehicle drive unit 12 smoothly rotates, and its durability is improved.

In addition, a circumscribed ring 136 which is circumscribed on the plurality of inner pins 119 and 120 is arranged between the two curved plates 117 and 118. Thus, an axial motion amount of the curved plates 117 and 118 are regulated. In addition, since the curved plates 117 and 118 are in sliding contact with the circumscribed ring 136, it is preferable that their wall surfaces to be in contact with each other are subjected to a grinding treatment. In addition, a function of the circumscribed ring 136 may be replaced with an inscribed ring inscribed on the plurality of inner pins 119 and 120, or an inscribed ring inscribed on the plurality of outer pins 121.

The inner pins 119 and 120 are circumferentially provided around the rotation axis of the input side rotation member 114 at regular intervals. In addition, inner pin bearings 119e and 120e are mounted on positions (a large diameter part 119a in the case of the both-sided inner pin 119) which abuts on the inner wall surfaces of the second through holes 117b and 118b of the curved plates 117 and 118, respectively. Each of the inner pin bearings 119e and 120e extends so as to abut on each of the curved plates 117 and 118. Thus, frictional resistance between the curved plates 117 and 118, and the inner pins 119 and 120, respectively can be reduced. In addition, the inner pin bearings 119e and 120e according to this embodiment are sliding bearings.

In addition, the inner pin bearings 119e and 120e may be made of a porous material such as sintered metal. Thus, the inner pin bearings 119e and 120e can store the lubricant oil in holes of the porous material. Since the stored lubricant oil comes out gradually, the lubricant oil can be supplied stably to the abutment part between the curved plates 117 and 118 and the pin bearings 119e and 120e, respectively, and to between the inner pin bearings 119e and 120e and the inner pins 119 and 120, respectively over a long period of time.

Referring to Fig. 7, the inner pin 119 includes the large diameter part 119a provided in its axial center, first and second small diameter parts 119b and 119c each having a diameter smaller than that of the large diameter part 119a and provided at its axial both ends, and guide parts 119d provided between the large diameter part 119a and each of the first and second small diameter parts 119b and 119c. A male screw is formed in a peripheral surface of each of the first and second small diameter parts 119b and 119c. An outer diameter of the guide part 119d is set so as to coincide with an inner diameter of holes 124a and 125a to receive the both-sided inner pin 119, and used to position the inner pin 119 in the radial direction with respect to the first and second carriers 124 and 125.

This inner pin 119 is the both-sided inner pin which is supported at both ends by the first and second carriers 124 and 125. More specifically, the first small diameter part 119b is directly fixed to the first carrier 124, and the second small diameter part 119c is fixed such that the second carrier 25 is pressed to an end face of the large diameter part 119a by a pressing and fixing means (which will be described below),

Referring to Fig. 8, the inner pin 120 is in the shape of a simple column having the same diameter in a whole longitudinal direction, and it is cantileverd (hereinafter referred as "one-sided") inner pin in which only one axial side end is supported by the first carrier 124.

In addition, the one-sided inner pin 120 is provided with a lubricant oil holding space 120a formed in its inside, and a through hole 120b radially extending from the lubricant oil holding space 120a. Similarly, the inner pin bearing 120e is provided with a through hole 120f penetrating in the radial direction. In addition, while the positions of the through holes 120b and 120f are not limited in particular, they are preferably provided so as to be opposed to the space between the curved plates 117 and 118 as shown in Fig. 4.

The lubricant oil holding space 120a is in the shape of a hollow formed from the one axial side end face of the inner pin 120. The lubricant oil is held in the lubricant oil holding space 120a, and mainly supplied to portions between the inner pin 120 and the inner pin bearing 120e, and to the contact part between the inner pin bearing 120e and the curved plates 117 and 118. More specifically, the lubricant oil is held in the lubricant oil holding space 120e while a sufficient amount of lubricant oil is supplied, and the lubricant oil held in the lubricant oil holding space 120e is discharged through the through holes 120b and 120f when the supply amount of the lubricant oil decreases. Thus, the lubricant oil can be more stably supplied.

In addition, a porous material (not shown) impregnated with the lubricant oil may be stored in the lubricant oil holding space 120a. In this case, since the lubricant oil comes out gradually through the through holes 120b and 120f, the lubricant oil can be supplied stably over a long period of time. In addition, the porous material includes sintered metal or foamed grease.

The through hole 120b in the inner pin 120 and the through hole 120f in the inner pin bearing 120e are continuously provided, and extend straight in the radial direction. Thus, the lubricant oil can be easily supplied in the radial direction.

In addition, while the one-sided inner pin 120 is only provided with the lubricant oil holding space 120a and the through hole 120b, and the inner pin bearing 120e is only provided with the through hole 120f in the above embodiment, the both-sided inner pin 119 and the inner pin bearing 119e may be similarly configured. In addition, not only the inner pins 119 and 120, but also the outer pin 121 and the outer pin bearing 121a may be also similarly configured.

In addition, diameters of the second through holes 117b and 118b are set to be larger by a predetermined amount than diameters (maximum outer diameters including the inner pin bearings 119e and 120e) of the inner pins 119 and 120. As a result, when the curved plates 117 and 118 try to rotate with the rotation of the input side rotation member 114, the inner pin 119 functions as the rotation regulation member to stop rotation motion of the curved plates 117 and 118, while allowing the revolution motions thereof.

The outer pins 121 are circumferentially provided around the rotation axis of the input side rotation member 114 at regular intervals. A center part of the outer pin 121 is held by the reducer housing 113, and both ends thereof abut on the axle bearings 126 and 127 and fixed thereto. Thus, the outer pin 121 engages with the waveforms 117c and 118c of the curved plates 117 and 118 to rotate the reducer housing 113 at speed reduced with respect to the input side rotation member 114.

Furthermore, an outer pin bearing 121a is attached to a position which abuts on the waveforms 117c and 118c of the curved plates 117 and 118. Thus, frictional resistance between the curved plates 117 and 118 and the outer pin 121 can be reduced. In addition, the outer pin bearing 121a according to this embodiment is a sliding bearing. In addition, the outer pin bearing 121a may be made of a porous material such as sintered metal.

A counterweight 122 has a through hole to receive the input side rotation member 114, at a position other than its gravity center, and fitted and fixed to the input side rotation member 114 with its phase shifted so as to offset unbalance inertia couple due to the eccentric motion of the eccentric part 116a, that it, shifted by 180° from that of the eccentric part 116a. Consequently, the counterweight 122 functions as a balance adjusting mechanism to absorb an unbalance load generated due to the eccentric motion of the eccentric part 116a. In addition, a counterweight 123 has the same configuration, and is fitted and fixed to the input side rotation member 114 with its phase shifted to offset unbalance inertia couple due to eccentric motion of the eccentric part 116b.

Referring to Fig. 6, regarding the right side of the center point G of the two curved plates 117 and 118, a relationship that L₁₁ × m₁₁ × ε₁₁ = L₁₂ × m₁₂ × ε₁₂ is satisfied wherein L₁₁ represents a distance between the center point G and a center of the curved plate 117, m₁₁ represents a sum of the mass of the curved plate 117, she rolling bearing 132, and the eccentric part 116a, ε₁₁ represents an eccentric amount of the gravity center of the curved plate 117 from the rotation axis, L₁₂ represents a distance between the center point G and the counterweight 122, m₁₂ represents the mass of the counterweight 122, and ε₁₂ represents an eccentric amount of the gravity center of the counterweight 122 from the rotation axis. In addition, the same relationship is satisfied between the curved plate 118 and the counterweight 123 on the left side of the center point G in Fig. 6.

The first and second carriers 124 and 125 are connected and fixed to the railway vehicle body, and hold the inner pins 119 and 120 in wall surfaces opposed to the curved plates 117 and 118, and rotatably support each of the reducer housing 113 with the first and second axle bearings 126 and 127 fitted and fixed to their outer diameter surfaces, and the input side rotation member 114 with the rolling bearings 130a and 130b fitted and fixed to their inner diameter surfaces.

The first carrier 124 has the hole 124a to receive the first small diameter part 119b of the both-sided inner pin 119, and a hole 124b to receive the one axial side end of the one-sided inner pin 120. In addition, the hole 124a is a screw hole in which a female screw is formed on its inner wall surface. Meanwhile, the hole 124b is a simple hole (in which a screw is not formed),

The second carrier 125 has the hole 125a to receive the second small diameter part 119c of the both-sided inner pin 119, and a hole 125b to receive the other axial side end of the one-sided inner pin 120. In addition, a diameter of the through hole 125a is set to be larger than that of the second small diameter part 119c, and a diameter of the hole 125b is set to be larger than that of the one-sided inner pin 120.

Hereinafter, a description will be made of a method for mounting the inner pins 119 and 120 on the first and second carriers 124 and 125. First, the inner pins 119 and 120 are fixed to the first carrier 124. More specifically, the first small diameter part 119b of the both-sided inner pin 119 is screwed with the hole 124a and fixed thereto, and the one axial side end of the one-sided inner pin 120 is pressed in the hole 124b and fixed thereto.

In addition, the method for fixing the inner pins 119 and 120 to the first carrier 124 is not limited to the above example, and as another example, the one side end of the both-sided inner pin 119 may be pressed into the hole 124a, while screws are formed in each of the one side end of the one-sided inner pin 120 and the hole 124b, and they may be screwed.

Then, the inner pin bearings 119e and 120e are mounted on the inner pins 119 and 120, respectively.

Then, the second carrier 125 is mounted in such a manner that the second small diameter part 119c of the both-sided inner pin 119 is inserted into the through hole 125a, and the other axial side end of the one-sided inner pin 120 is inserted into the hole 125b. At this time, since a gap is provided between the inner pin 119 and 120 and the through holes 125a and 125b, respectively, some degree of production error and mounting error are allowed.

Finally, the both-sided inner pin 119 is fixed by the pressing and fixing means. The pressing and fixing means according to this embodiment is composed of a male screw provided in the second small diameter part 119c and a nut 137 to be screwed with it. That is, when the nut 137 is screwed with the second small diameter part abc, the second carrier 125 is pressed toward the large diameter part 119a, so that the both-sided inner pin 119 can be strongly fixed to the first and second carriers 124 and 125.

At this time, the both-sided inner pin 119 is positioned in the radial direction by the guide part 119d. In addition, while the guide part 119d is in the cylindrical shape in Fig. 7, the present invention is not limited to this, and any shape may be employed. For example, when the guide part is in the shape of a cone in which its diameter gradually reduces toward the end of the both-sided inner pin 119, and opening parts of the holes 124a and 125a opposed to the both-sided inner pin 119 are formed into conical surfaces to correspond to the shape of the guide part, the positioning can be further easily performed.

According to the above embodiment, an assembling property is improved in the railway vehicle drive unit 112. In addition, with a view to improving the assembling property and reducing the number of components, the number of the both-sided inner pins 119 is desirably less than the number of the one-sided inner pin 120, However, since loads are applied from the curved plates 117 and 118 to the inner pins 119 and 120, it is desirable that the both-sided inner pins 119 and the one-sided inner pins 120 are arranged at regular intervals, respectively.

The lubricant oil circulating mechanism is mainly composed of an axis oil path 114a extending in the input side rotation member 114 in the axial direction, a lubricant oil supply port 114b extending from the axis oil path 114a toward the outer diameter surface of the input side rotation member 114, a lubricant oil discharge port 125c provided in the second carrier 125, a circulation oil path 134 connecting the lubricant oil discharge port 125c and the axis oil path 114a to return the lubricant oil discharged from the lubricant oil discharge port 125c to the axis oil path 114a, and a lubricant oil storage part 135 to temporarily store the lubricant oil discharged from the lubricant oil discharge port 125c.

In addition; the lubricant oil supply port 114b according to this embodiment is provided in a position to hold the eccentric member 116. In addition, the eccentric member 116, and the inner rings 132a and 133a of the rolling bearings 132 and 133 have through holes 116c, 132d, and 133d communicating with the lubricant oil supply port 114b, respectively, and the lubricant oil are supplied to the railway vehicle drive unit 112 through those through holes.

In addition, the lubricant oil discharge port 125c according to this embodiment extends from between the second axle bearing 127 and the seal member 129 through the inside of the second carrier 125 and discharges the lubricant oil outside the railway vehicle drive unit 112.

In addition, while the lubricant oil storage part 135 according to this embodiment is arranged outside the railway vehicle drive unit 112, the present invention is not limited to this, and it may be arranged in the second carrier 125. In addition, a filter device (not shown) to filter the lubricant oil stored in the lubricant oil storage part 135 may be mounted.

Hereinafter, an operational principle of the above railway vehicle drive unit 112 will be described in detail.

First, the input side rotation member 114 and the eccentric member 116 integrally rotate with the rotation of the drive source. At this time, while the curved plates 117 and 118 also try to rotate, their rotation motion is stopped by the inner pins 119 and 120 penetrating the second through holes 117b and 118b, so that they only execute the revolution motion. That is, the curved plates 117 and 118 shift in parallel on the circumferential track around the rotation axis of the input side rotation member 114.

When the curved plates 117 and 118 execute the revolution motion, the waveforms 117c and 118c engage with the outer pins 121, the reducer housing 113 and the wheel 111 integrally rotate in the same direction as that of the input side rotation member 114. At this time, the rotation speed transmitted from the curved plates 117 and 118 to the reducer housing 113 has been reduced and torque is high.

More specifically, a reduction ratio of the railway vehicle drive unit 12 is calculated by a formula Z_{B1}/(Z_{A1}-Z_{B1}) wherein Z_{A1} represents the number of the outer pins 121, and Z_{B1} represents the number of the waveforms 117c and 118c of the curved plates 117 and 118, and a speed ratio in this embodiment shown in Fig. 4 is calculated by a formula 1/(n1+1) wherein n1 represents the reduction ratio. Since Z_{A1} = 24 and Z_{B1} = 22 in the embodiment shown in Fig. 5, the reduction ratio is 11, and the speed ratio is 1/12. Therefore, even when a low-torque high-rotation type drive source is used, the torque required for the wheel 111 can be transmitted.

Thus, according to the railway vehicle drive unit 112, since the wheel 111 is fitted and fixed to the outer diameter surface of the reducer housing 113, the center of the wheel 111 can be arranged in the appropriate position. As a result, the railway vehicle drive unit 112 can be highly reliable.

Thus, by employing the reducing mechanism 115 capable of obtaining the high reduction ratio without needing a multistage configuration, the railway vehicle drive unit 112 can be compact in size and implement the high reduction ratio. In addition, by providing the pin bearings 119e and 120e and the outer pin bearing 121a for the inner pins 119 and 120 and the outer pin 121, respectively which abut on the curved plates 117 and 118, the frictional resistance in the contact part is reduced. As a result, transmission efficiency is improved in the railway vehicle drive unit 112.

Next, a detailed description will be made of a flow of the lubricant oil of the railway vehicle drive unit 112 having the above configuration. First, the lubricant oil flowing in the axis oil path 114a is discharged from the lubricant oil supply port 114b by the centrifugal force due to the rotation of the input side rotation member 114.

Since the lubricant oil in the railway vehicle drive unit 112 is further centrifugalized, the lubricant oil discharged from the lubricant oil supply port 114b lubricates the inner side track surfaces, the cylindrical rollers 132b and 133b, and the outer side track surface of the rolling bearings 133 and 132. Thus, the lubricant oil is moved toward the radial outer side by the centrifugal force while flowing in the oil paths 117d and 118d of the curved plates 117 and 118 and lubricating the surfaces of the curved plates 117 and 118. At this time, the lubricant oil after reached the oil paths 117d and 118d is partially held in the lubricant oil holding spaces 117e and 118e. Thus, when the lubricant oil reaches the second through holes 117b and 118b, it lubricates the abutment parts between the curved plates 117 and 118 and the inner pin bearings 119e and 120e, respectively. In addition, when the lubricant oil reaches the through hole 120f provided in the inner pin bearing 120e, it lubricates a space between the inner pin bearing 120e and the inner pin 120. At this time, the lubricant oil partially flows in the through hole 120b provided in the inner pin 120 and held in the lubricant oil holding space 120a. Then, the lubricant oil is further moved toward the radial outer side by the centrifugal force and when it reaches the peripheral surfaces of the curved plates 117 and 118, it lubricates an abutment part between the curved plates 117 and 118, and the outer pin bearing 121a, and the first and second axle bearings 126 and 127 and so on.

Thus, the lubricant oil reaches spaces between the axle bearings 126 and 127, and the seal members 128 and 129, respectively and then it is discharged from the lubricant oil discharge port 125c toward the outside of the railway vehicle drive unit 112, and stored temporarily in the lubricant oil storage part 135 and then returned to the axis oil path 114a through the circulation oil path 134.

Thus, since the oil paths 117d and 118d are provided in the curved plates 117 and 118 in the railway vehicle drive unit 112, the lubricant oil can be easily supplied to each part such as the abutment part between the curved plates 117 and 118, and the inner pin bearings 119e and 120e, respectively through the oil paths 117d and 118d. In addition, since the diameters of the opening parts of the oil path 117d and 118d at the radial inner side end are set to be larger than that of the opening parts thereof at the radial outer side end, the lubricant oil can easily flow in the oil paths 117d and 118d.

In addition, since the through hole 120f is provided in the inner pin bearing 120e, the lubricant oil can be easily supplied into each part such as the space between the inner pin bearing 120e and the inner pin 120 through the through hole 120f.

Furthermore, since the through hole 120b and the lubricant oil holding space 120a are provided in the inner pin 120, the lubricant oil is held in the lubricant oil holding space 120a through the through hole 120b while the sufficient amount of lubricant oil is supplied, and the lubricant oil held in the lubricant oil holding space 120a is discharged through the through hole 120b when the supply amount of lubricant oil decreases.

In addition, by providing the lubricant oil circulating mechanism, and supplying the lubricant oil from the input side rotation member 114 to the railway vehicle drive unit 112, the lubricant oil shortage due to the centrifugal force at the time of rotation can be eliminated in the vicinity of the input side rotation member 114. In addition, by discharging the lubricant oil from the lubricant oil discharge port 125c, agitation resistance is reduced and the torque loss of the railway vehicle drive unit 112 can be reduced.

In addition, at the time of high-speed rotation, the lubricant oil which cannot be discharged is stored temporarily in the lubricant oil storage part 135. As a result, the torque loss of the railway vehicle drive unit 112 can be prevented from increasing. Meanwhile, at the time of low-speed rotation, even when the lubricant oil is not likely to reach the lubricant oil discharge port 125c due to small centrifugal force, the lubricant oil stored in the lubricant oil storage part 135 can be returned to the axis oil path 114a. As a result, the lubricant oil can be stably supplied to the railway vehicle drive unit 112.

Furthermore, when the filter device is provided in the lubricant oil storage part 135, a foreign material such as abrasion powder can be removed from the lubricant oil discharged from the railway vehicle drive unit 112 before recirculation, so that high lubrication performance can be maintained for a long period of time.

In addition, while the oil path 117d extends straight in the radial direction in the description of the above embodiment, the present invention is not limited to this, and it may be in another shape such as a curved shape or radially inclined shape.

In addition, while the oil paths 117d are circumferentially provided at regular intervals in the description of the above embodiment, the present invention is not limited to this, and one of them may be provided at one part or they may be provided at certain intervals in the circumferential direction.

Still in addition, while the lubricant oil holding space 117e is positioned in the region between the first through hole 117a and the second through hole 117b in the description of the above embodiment, the present invention is not limited to this, and it may be positioned in the region between the second through hole 117b and the peripheral surface of the curved plate 117.

Furthermore, while the through hole 120b provided in the inner pin 120, and the through hole 120f provided in the inner pin bearing 120e extend straight in the radial direction in the description of the above embodiment, the present invention is not limited to this, and they may be in a cured shape or extend in a radially inclined direction.

Still in addition, while the lubricant oil holding space 120a and the through hole 120b are provided in the one-sided inner pin 120, and the through hole 120f is provided in the inner pin bearing 120e in the description of the above embodiment, the present invention is not limited to this, and the lubricant oil holding space and the through hole may be provided in each of the one-sided inner pin 120 and the both-sided inner pins 119, and the through hole may be provided in each of the inner pin bearings 119e and 120e. Alternatively, they may be selectively provided such that they are alternately provided in the circumferential direction.

In addition, like third and fourth embodiments which will be described below, when the lubricant oil is carried from a bottom region to an upper region, it is preferable that the lubricant oil holding space and the through hole are provided in the inner pins 119 and 120 positioned in the upper region, and the through hole is provided in each of the inner pin bearings 119e and 120e positioned in the upper region. Since the lubricant oil is moved in the lower direction due to the gravity, it is likely that the lubricant oil amount shortage is generated in the upper region as compared with the bottom region. However, when the lubricant oil holding space and the through hole are provided in the inner pins 119 and 120 positioned in the upper region, and the through hole is provided in each of the inner pin bearings 119e and 120e positioned in the upper region, the lubricant oil discharged from the upper region can easily flow in from the through hole, and can be held in the lubricant oil holding space. As a result, the lubricant oil amount shortage can be eliminated.

In addition, while the two curved plates 117 and 118 of the reducing mechanism 115 are provided with their phases shifted by 180° in the above second embodiment, the number of the curved plates may be optionally set, and in a case where three curved plates are provided, their phases may be shifted by 120°.

Furthermore, while the eccentric member 116 having the eccentric parts 116a and 116b is fitted and fixed to the input side rotation member 114 in the description of the above embodiment, the present invention is not limited to this, and the eccentric parts 116a and 116b may be directly formed on the outer diameter surface of the input side rotation member 114.

### (3) Third and subsequent embodiments

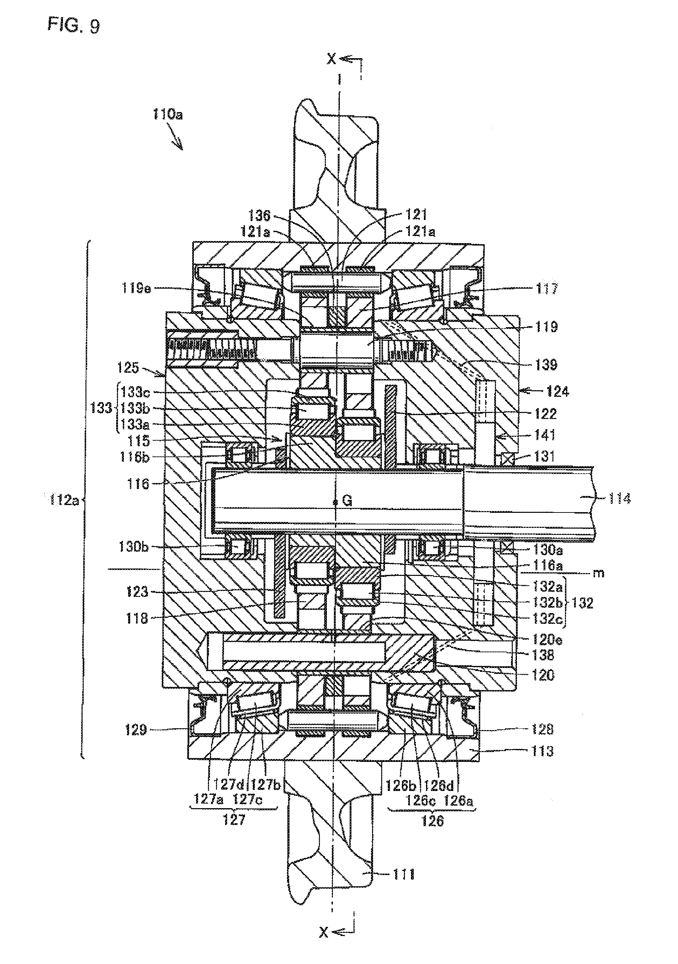

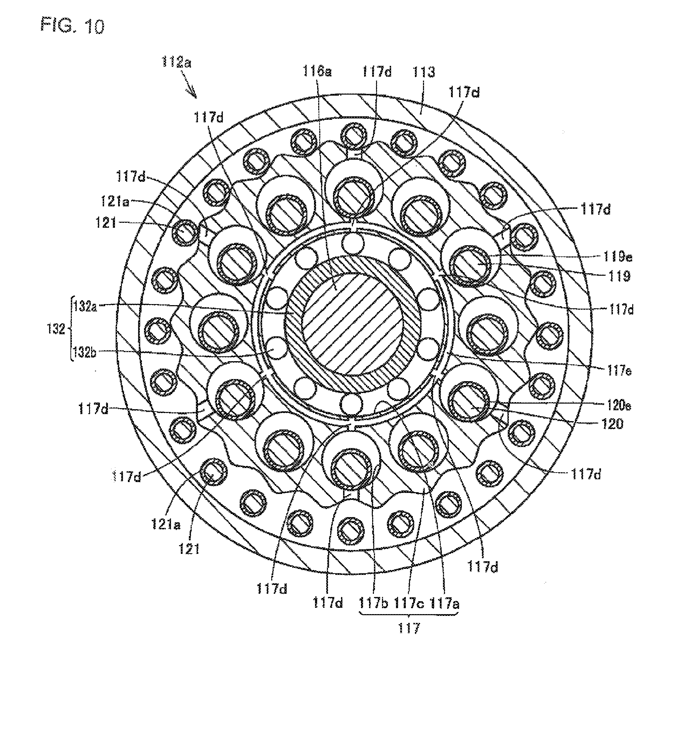

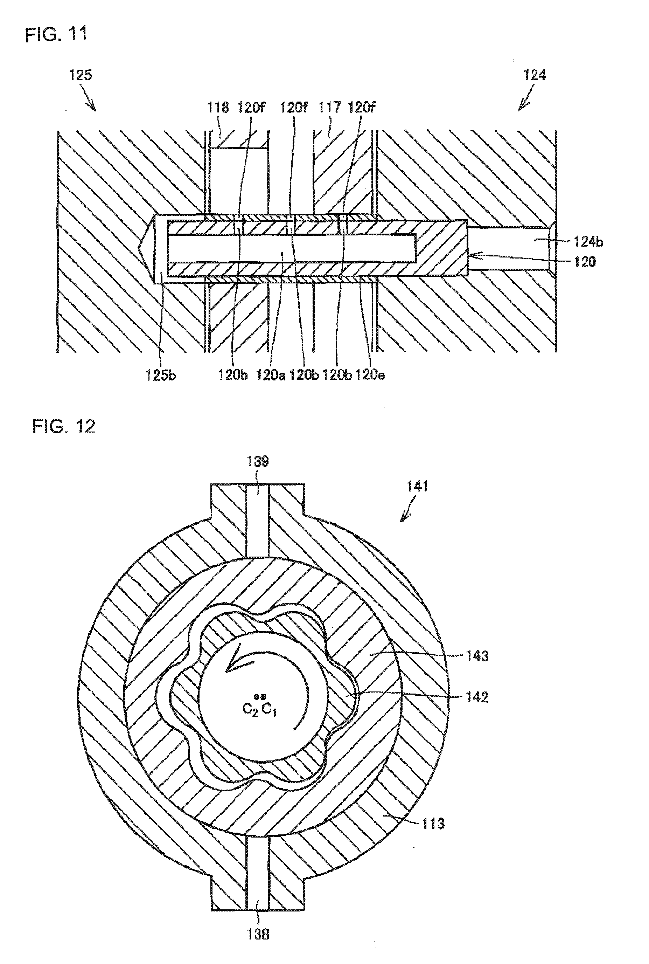

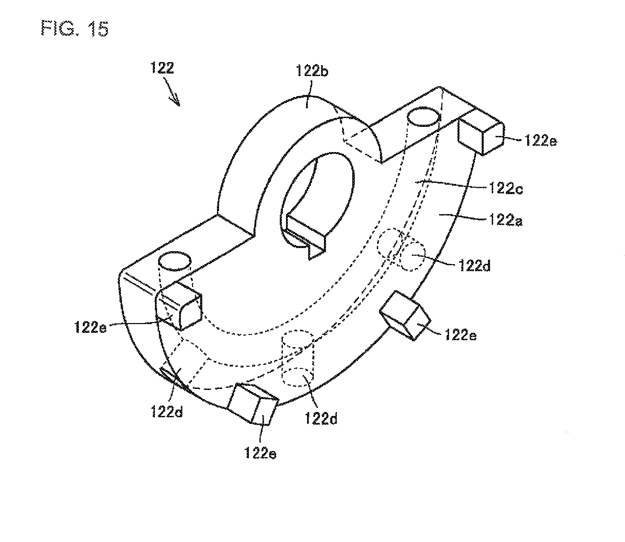

Hereinafter, a description will be made of a railway vehicle drive unit 112a according to a third embodiment of the present invention, and a railway vehicle wheel drive device 110a including the railway vehicle drive unit 112a. In addition, the same reference is allocated to the same component as that of the second embodiment in the following drawings and its description is not reiterated. Fig. 9 is a schematic cross-sectional view of the railway vehicle wheel drive device 110a, Fig. 10 is a cross-sectional view taken along a line X-X in Fig. 10, and Fig. 11 is an enlarged view of an inner pin 120. Figs. 12 to 14 are views each showing a pump serving as a lubricant oil transferring mechanism, and Fig. 15 is a view showing a balance weight 122 provided with the lubricant oil transferring mechanism.

Referring to Figs. 9 and 10, the railway vehicle drive unit 112a according to this embodiment is mainly composed of a reducer housing 113, an input side rotation member 114, a reducing mechanism 115, first and second carriers 124 and 125 serving as fixed members, first and second axle bearings 126 and 127, and a lubricant oil transferring mechanism to transfer the lubricant oil by use of the rotation of the input side rotation member 114.

The reducer housing 113 has a space sealed with the lubricant oil, and is held on an inner diameter surface of a wheel 111. The space sealed with the lubricant oil means a region surrounded by the reducer housing 113, the first and second carriers 124 and 125, and seal members 128 and 129. In addition, it internally holds the reducing mechanism 115.

The reducing mechanism 115 is composed of an eccentric member 116, curved plates 117 and 118 serving as revolution members, a plurality of inner pins 119 and 120 serving as rotation regulation members, a plurality of outer pins 121 serving as periphery engagement members, and members associated with the above components, and reduces rotation speed of the input side rotation-member 114 and transmits it to the reducer housing 113.

In addition, the reducing mechanism 115 is arranged in a space in which the lubricant oil is sealed with at least one part thereof soaked in the lubricant oil. More specifically, the lubricant oil is sealed such that an oil surface height is at a position of a line m in Fig. 9 under the condition that the reducing mechanism 115 is stopped.

Regarding oil paths 117d and 118d provided in the curved plates 117 and 118, respectively diameters of opening parts of the oil paths 117d and 118d at the radial inner side end are different from the diameters of the opening parts thereof at the radial outer side end. More specifically, the diameters of the opening parts of the oil paths 117d and 118d at the radial outer side end are larger than the diameters of the opening parts thereof at the radial inner side end.

Referring to Fig. 11, through holes 120b provided in the inner pin 120, and through holes 120f provided in an inner pin bearing 120e are provided in a position opposed to the space between the curved plates 117 and 118, and in positions which abut on the curved plates 117 and 118. Thus, the lubricant oil can be actively supplied to a contact part between each of the curved plates 117 and 118, and the inner pin bearing 120e. In addition, in this case, it is preferable that the through holes 120b and 120f provided in the positions which abut on the curved plates 117 and 118 are opposed to the oil paths 117d and 118d provided in the curved plates 117 and 118. Thus, the lubricant oil supplied to the oil paths 117d and 118d can be easily supplied into the through holes 120b and 120f.

The lubricant oil transferring mechanism transfers the lubricant oil from the bottom region to the upper region in the above space sealed with the lubricant oil, by use of the rotation of the input side rotation member 114. More specifically, it includes a pump 141 arranged in the first carrier 124, a lubricant oil supply path 138 extending from the pump 141 toward the bottom region of the space, to supply the lubricant oil to the pump 141, and a lubricant oil discharge path 139 extending from the pump 141 toward the upper region of the space, to discharge the lubricant oil from the pump 141.

Referring to Fig. 12, the pump 141 is a cycloidal pump composed of a drive gear 142 having a tooth profile around its outer diameter surface and integrally rotating with the input side rotation member 114, and a driven gear 143 having a tooth profile around its inner diameter surface, rotatably supported by the first carrier 124, and rotating around a point c₂ which is shifted from a rotation center c₁ of the drive gear 142 in one horizontal direction.

The above pump 141 can discharge the lubricant oil pumped from the bottom region of the space through the lubricant oil supply path 138, to the upper region through the lubricant oil discharge path 139 when the input side rotation member 114 rotates in a counterclockwise direction (positive rotation).

Meanwhile, the above pump 141 cannot transfer the lubricant oil when the input side rotation member 114 rotates in a clockwise direction (negative rotation). Thus, it is preferable to provide a second pump capable of transferring the lubricant oil when the input side rotation member 114 rotates in the clockwise direction, separately from the pump 141. More specifically, the pump has the same structure of the pump 141 except that the positional relationship between c₁ and c₂ are reversed.

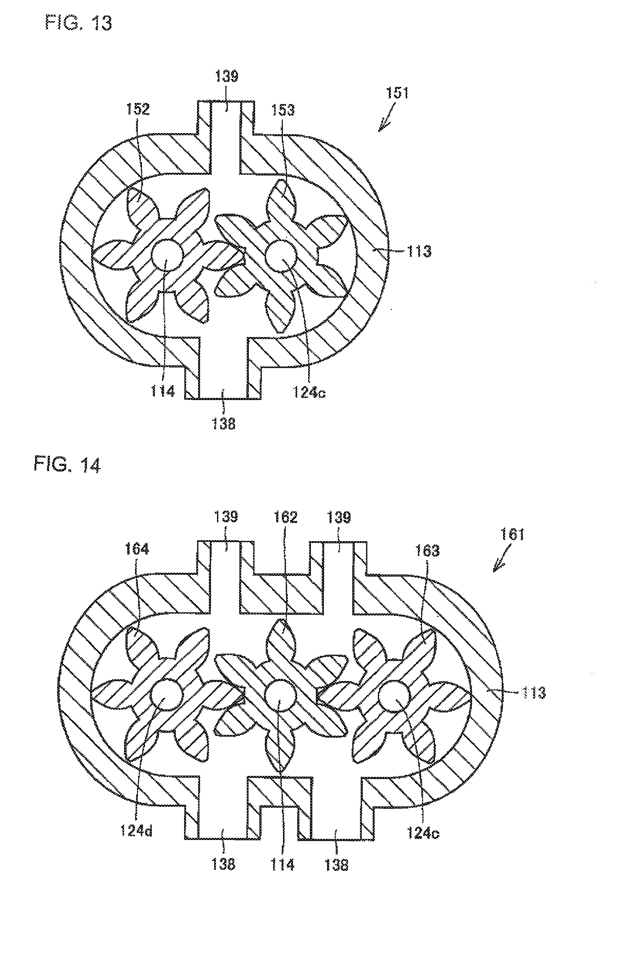

Referring to Fig. 13, a pump 151 according to another embodiment is composed of a drive gear 152 having a tooth profile around its outer diameter surface and integrally rotating with the input side rotation member 114, and a driven gear 153 having a tooth profile meshing with the drive gear 152 around its outer diameter surface, and rotatably arranged on one horizontal direction of the drive gear 152. In addition, according to this embodiment, the driven gear 153 is fitted and fixed to a rotation shaft 124c rotatably mounted on the first carrier 124.

Even when the above pump 151 is used instead of the pump 141 in Fig. 12, the lubricant oil can be transferred when the input side rotation member 114 rotates in the counterclockwise direction. In addition, by providing a second pump having the same structure as that of the pump 141 except that the positional relationship between the drive gear 152 and the driven gear 153 is reversed, the lubricant oil can be transferred when the input side rotation member 114 rotates in the clockwise direction.

Furthermore, referring to Fig. 14, a pump 161 according to still another embodiment is composed of a drive gear 162 having a tooth profile around its outer diameter surface, and integrally rotating with the input side rotation member 114, a first driven gear 163 having a tooth profile meshing with the drive gear 162 around its outer diameter surface, and rotatably arranged one horizontal direction of the drive gear 162, and a second driven gear 164 having a tooth profile meshing with the drive gear 162 around its outer diameter surface, and rotatably arranged on the other horizontal side of the drive gear 162. In addition, according to this embodiment, the driven gears 163 and 164 are fitted and fixed to rotation shafts 124c and 124d rotatably mounted on the first carrier 124.

According to the above pump 161, when the input side rotation member 114 rotates in the counterclockwise direction, the drive gear 162 and the first driven gear 163 function as first pumps to transfer the lubricant oil. Meanwhile, when the input side rotation member 114 rotates in the clockwise direction, the drive gear 162 and the second driven gear 164 function as second pumps to transfer the lubricant oil. Thus, as compared with the case where the pump 141 or 151 shown in Fig. 12 or Fig. 13 is arranged at two positions, a space for the pump can be small.

While the pump is used as the lubricant oil transferring mechanism in the above embodiment, the present invention is not limited to this, and any configuration may be used as long as the lubricant oil is transferred by the use of the rotation of the input side rotation member 114. For example, as shown in Fig. 15, the lubricant oil transferring mechanism may be provided in the counterweight 122. Since a counterweight 123 is similarly configured, its description is not reiterated.

Referring to Fig 15, the counterweight 122 includes a large diameter fan-shaped part 122a, and a small diameter fan-shaped part 122b having a radius smaller than that of the large diameter fan-shaped part 122a, and connected to the large diameter fan-shaped part 122a such that their chords are in contact with each other.

In addition, the large diameter fan-shaped part 122a is provided with a circumferential oil path 122c having an opening part in its chord and circumferentially extending in the large diameter fan-shaped part 122a, and a radial oil path 122d extending from the circumferential oil path 122c toward an outer diameter surface of the large diameter fan-shaped part 122a. In addition, a plurality of fins 122e protruding in a thickness direction are provided on an end face of the balance weight 122.

In addition, since the other components constituting the railway vehicle drive unit 112a are the same as those in the railway vehicle drive unit 112 according to the second embodiment, their descriptions are not reiterated.

Hereinafter, the flow of the lubricant oil in the railway vehicle drive unit 112a according to another embodiment will be described in detail. First, the lubricant oil is sealed in the space in the reducer housing 113, that is, in the region surrounded by the reducer housing 113, the first and second carriers 124 and 125, and the seal members 128 and 129, and an oil surface height is at the position of the line m in Fig. 9 under the condition that the reducing mechanism 115 is stopped.

When the input side rotation member 114 rotates, the pump 141 serving as the lubricant oil transferring mechanism discharges the lubricant oil pumped from the bottom region of the space through the lubricant oil supply path 138, to the upper region through the lubricant oil discharge path 139. In addition, the counterweight 122 serving as the lubricant oil transferring mechanism rotates and moves between the bottom region and the upper region in the space. At this time, in the bottom region, the lubricant oil is stored in the circumferential oil path 122c and the radial oil path 122d, and in the upper region, the lubricant oil is discharged, and the lubricant oil is propelled upward by the fin 122e. Thus, the lubricant oil can be supplied to the upper region of the space (the region on the upper side of the input side rotation member 114 in Fig. 9).

The lubricant oil discharged by the lubricant oil transferring mechanism is supplied to the oil paths 117d and 118d of the curved plates 117 and 118, and moved to the lower direction due to the gravity along the surfaces of the curved plates 117 and 118. Thus, when the lubricant oil reaches the second through holes 117b and 118b, it lubricates the components positioned in the upper region such as the abutment parts between the curved plates 117 and 118, and the inner pin bearings 119e and 120e, respectively. In addition, it flows in the through hole 120f provided in the inner pin bearing 120e to lubricate the space between the inner pin bearing 120e and the inner pin 120. At this time, the lubricant oil partially flows in the through hole 120b provided in the inner pin 120 and it is held in the lubricant oil holding space 120a.

Thus, the lubricant oil is further moved from the positions of the second through holes 117b and 118b to the lower part due to the gravity. At this time, the moving lubricant oil is partially held in lubricant oil holding spaces 117e and 118e. Thus, when the lubricant oil reaches the positions of the first through holes 117a and 118a, it is returned to the bottom region while lubricating outer side track surfaces, cylindrical rollers 132b and 133b, and inner side track surfaces of rolling bearings 133 and 132.

Thus, when the lubricant oil transferring mechanism is configured as described above, the lubricant oil can be actively supplied to the upper region of the space in the reducer housing 113, so that the railway vehicle drive unit 112a can be superior in lubrication performance. In addition, all the above-described lubricant oil transferring mechanisms (the pumps 141, 151, and 161, and the counterweight 122) are not necessarily provided, and the effect of the present invention can be provided even with at least one of them.

In addition, since the diameters of the opening parts of the oil paths 117d and 118d at the radial outer side end are set to be larger than the diameters of the opening parts thereof at the radial inner side end, the lubricant oil can easily flow in the oil paths 117d and 118d.

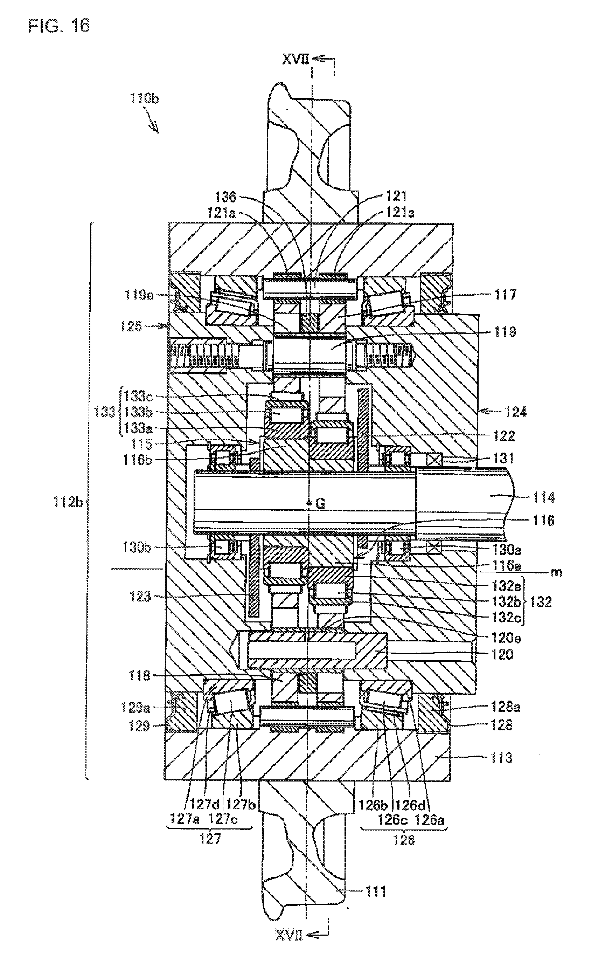

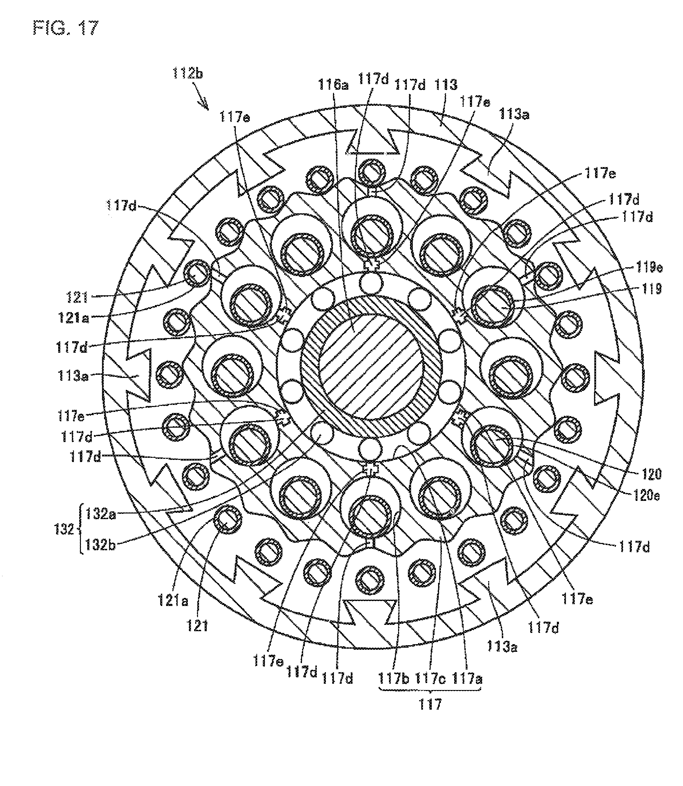

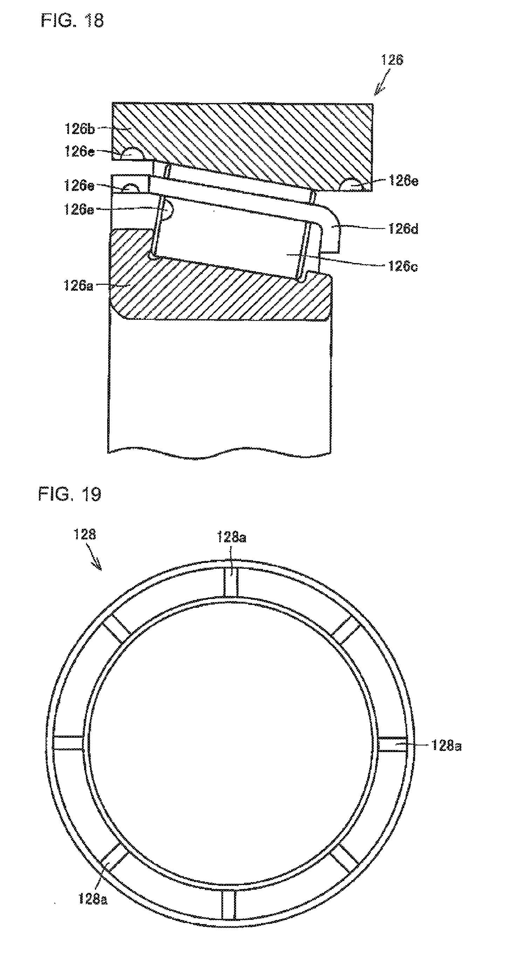

Next, a description will be made of a railway vehicle drive unit 112b according to a fourth embodiment of the present invention, and a railway vehicle wheel drive device 110b including the railway vehicle drive unit 112b. In addition, the same reference is allocated to the same component as that of the second embodiment in the following drawings and its description is not reiterated. Fig. 16 is a schematic cross-sectional view of the railway vehicle wheel drive device 110b, Fig. 17 is a cross-sectional view taken along a line XVII-XVII in Fig. 14, and Fig. 18 is a view showing a first axel bearing 126, and Fig. 19 is a front view of a seal member 128.

Referring to Figs. 16 and 17, the railway vehicle drive unit 112b according to still another embodiment is mainly composed of a reducer housing 113, an input side rotation member 114, a reducing mechanism 115, first and second carriers 124 and 125 serving as fixed members, first and second axle bearings 126 and 127, and a lubricant oil transferring mechanism to transfer a lubricant oil by use of the rotation of the reducer housing 113.

The reducer housing 113 has a space sealed with the lubricant oil, and is held on an inner diameter surface of a wheel 111. The space sealed with the lubricant oil means a region surrounded by the reducer housing 113, the first and second carriers 124 and 125, and seal members 128 and 129. In addition, it internally holds the reducing mechanism 115.

The reducing mechanism 115 is composed of an eccentric member 116, curved plates 117 and 118 serving as revolution members, a plurality of inner pins 119 and 120 serving as rotation regulation members, a plurality of outer pins 121 serving as periphery engagement members, and members associated with the above components, and reduces rotation speed of the input side rotation member 114 and transmits it to the reducer housing 113.

In addition, the reducing mechanism 115 is arranged in the space sealed with the lubricant oil, with at least one part thereof soaked in the lubricant oil. More specifically, the lubricant oil is sealed such that an oil surface height is at a position of a line m in Fig. 16 under the condition that the reducing mechanism 115 is stopped.

Regarding oil paths 117d and 118d provided in the curved plates 117 and 118, diameters of opening parts of the oil paths 117d and 118d at the radial inner side end are the same as diameters of opening parts thereof at the radial outer side end. Here, regarding the oil paths 117d and 118d, it is preferable that the diameters of the opening parts of the oil paths 117d and 118d at the radial outer side end are larger than the diameters of the opening parts thereof at the radial inner side end, like in the third embodiment. Here, when they are different in diameter, the opening parts have to be processed separately. However, when the diameters are the same, they can be processed at the same time, which improves processability.

In addition, lubricant oil holding spaces 117e and 118e in the curved plates 117 and 118 circumferentially project from the oil paths 117d and 118d, respectively and do not connect the oil paths 117d and 118d to the oil paths 117d and 118d, respectively, but are positioned every oil paths 117d and 118d, respectively.

The lubricant oil transferring mechanism transfers the lubricant oil from a bottom region to an upper region of the space sealed with the lubricant oil by the use of the rotation of the reducer housing 113. More specifically, the mechanism includes a concavo-convex part formed in the surface of the reducer housing 113, and the members rotating with the rotation of the reducer housing 113. In addition, "the members rotating with the rotation of the reducer housing 113" correspond to the outer pin 121 and an outer pin bearing 121a, outer rings 126b and 127b, tapered rollers 126c and 127c, and retainers 126d and 127d of the first and second axle bearings 126 and 127, and the seal members 128 and 129.

Referring to Fig. 17, a concavo-convex part 113a is formed in the inner diameter surface of the reducer housing 113. The concavo-convex part 113a according to this embodiment is a protrusion extending in a direction intersecting with a rotation direction of the reducer housing 113. In addition, this concavo-convex part 113a may be directly formed in the inner diameter surface of the reducer housing 113, or an annular belt (not shown) having the concavo-convex part 113a in its inner diameter surface may be fixed on the inner diameter surface of the reducer housing 113.

While the shape of the protrusion is not limited in particular, according to this embodiment, a cross section of the protrusion taken along a line perpendicular to the rotation axis of the reducer housing 113 is in a shape of an isosceles trapezoid having a short side and a long side which are parallel to each other. The protrusion is arranged such that the short side is in contact with the inner diameter surface of the reducer housing 113. In other words, a wall surface of the protrusion opposed to the circumferential direction of the reducer housing 113 (the wall surface corresponding to an oblique side of the isosceles trapezoid) is in contact with a tangent line of the inner diameter surface of the reducer housing 113 at a sharp angle. Thus, an ability to hold the lubricant oil by the protrusion is improved.

In addition, the protrusions are arranged in 12 positions around the inner diameter surface of the reducer housing 113 at intervals of 30°, Thus, by providing the protrusions at regular intervals, the lubricant oil can be stably transferred.

Referring to Fig. 18, concavo-convex parts 126e are also formed in the first axle bearing 126. The concavo-convex parts 126e according to this embodiment are provided in an inner diameter surface of the outer ring 126b, an end face of the tapered roller 126c, and an end face of the retainer 126d. In addition, since the second axle bearing 127 is similarly provided, its description is not reiterated.

Referring to Fig. 16, the seal member 128 is provided with a weir 128a expanding in a direction intersecting with the rotation direction of the reducer housing 113. This weir 128a also functions as the lubricant oil transferring mechanism. Referring to Fig. 19, the weirs 128a according to this embodiment are regularly provided in 8 positions at intervals of 45°.

In addition, since the other components constituting the railway vehicle drive unit 112b are the same as those of the railway vehicle drive unit 112 according to the second embodiment, their descriptions are not reiterated.

Here, a detailed description will be made of a flow of the lubricant oil of the railway vehicle drive unit 112b according to still another embodiment. First, the lubricant oil is sealed in the space of the reducer housing 113, that is, in the region surrounded by the reducer housing 113, the first and second carriers 124 and 125, and the seal members 128 and 129, and an oil surface height is at a position of a line m in Fig. 16 under the condition that the reducing mechanism 15 is stopped.

When the reducer housing 113 rotates, the lubricant oil transferring mechanism (the concavo-convex parts 113a and 126e, and the weir 128) moves between the bottom region and the upper region of the space while rotating in the space. At this time, the lubricant oil is stored in the bottom region, and the lubricant oil is discharged in the upper region. Thus, the lubricant oil can be supplied to the upper region (region on the upper side of the input side rotation member 114 in Fig. 16) in the space.

Similar to the third embodiment, the lubricant oil discharged by the lubricant oil transferring mechanism lubricates the components positioned in the upper region, such as the space between the inner pin 119 and the inner pin bearing 119e, and the space between the inner pin bearing 119e and the curved plates 117 and 118, while returned to the bottom region due to the gravity. In addition, it is partially held in the lubricant oil holding spaces 117e and 120a.

When the lubricant oil transferring mechanism is configured as described above, the lubricant oil can be actively supplied to the upper region in the space of the reducer housing 113, so that the railway vehicle drive unit 112 can be superior in lubrication performance. In addition, there is no need to provide all the above-described lubricant oil transferring mechanism (the concavo-convex parts 113 and 126e, and the weir 128), and the effect of the present invention can be provided even with at least one of them.

In addition, the rolling bearings 126, 127, 130a, 130b, 132, and 133 in the embodiments following the second embodiment are not limited to the configurations shown in Fig. 4, and various kinds of bearings can be used such as a sliding bearing, cylindrical roller bearing, tapered roller bearing, needle roller bearing, self-aligning roller bearing, deep groove ball bearing, angular ball bearing, three point contact ball bearing, or four point contact ball bearing, regardless of whether the sliding bearing or the rolling bearing, regardless of whether a rolling body is the roller or ball, and regardless of whether a double row or single row.

In addition, while the inner pin bearing 119e and 120e and the outer pin bearing 121a in the above embodiment are the sliding bearings, the present invention is not limited to this, and a rolling bearing may be employed. In this case, it is preferable to employ a needle roller bearing with a view to reducing a size in a thickness direction.

Although the embodiments of the present invention have been described with reference to the drawings in the above, the present invention is not limited to the above-illustrated embodiments. Various kinds of modifications and variations may be added to the illustrated embodiments within the same or equal scope of the present invention.

### INDUSTRIAL APPLICABILITY

The present invention can be advantageously applied to a railway vehicle drive unit.

## Claims

1. A railway vehicle drive unit to rotatably drive a wheel of a railway vehicle, comprising:
a reducer housing held on an inner diameter surface of the wheel, and integrally rotating with the wheel;
an input side rotation member having an eccentric part, and connected to a drive source;
a revolution member supported by said eccentric part in a relatively rotatable manner, to execute revolution motion around a rotation axis of said input side rotation member;
a rotation regulation member to prevent rotation motion of said revolution member, allowing the revolution motion thereof, and
a periphery engagement member fixed to the reducer housing, to rotate said reducer housing at speed reduced with respect to said input side rotation member by engaging with a periphery of said revolution member.

2. The railway vehicle drive unit according to claim 1, further comprising a balance adjusting mechanism to absorb an unbalance load generated due to eccentric motion of said eccentric part.

3. The railway vehicle drive unit according to claim 2, wherein
said balance adjusting mechanism includes first and second eccentric parts arranged with their phases shifted to each other so as to offset centrifugal force due to the eccentric motion.

4. The railway vehicle drive unit according to claim 2, wherein
said balance adjusting mechanism includes a counterweight fitted and fixed to said input side rotation member with a phase shifted so as to offset unbalance inertia coupling due to eccentric motion of said revolution member.

5. The railway vehicle drive unit according to claim 1, further comprising:
a fixed member arranged in said reducer housing, and connected and fixed to a vehicle body; and
first and second axle bearings to rotatably support said reducer housing with respect to said fixed member on one axial side and the other axial side of a fit position of the wheel.

6. The railway vehicle drive unit according to claim 5, wherein
said first and second axle bearings each is a tapered roller bearing including an inner ring fixed to an outer diameter surface of said fixed member, an outer ring fixed to an inner diameter surface of said reducer housing, and a plurality of tapered rollers arranged between said inner ring and said outer ring, and arranged such that their small diameter side ends are opposed to each other.

7. The railway vehicle drive unit according to claim 1, wherein
said revolution member has a plurality of waveforms composed of a trocoidal curve around its periphery, and
said periphery engagement member is composed of a plurality of outer pins to engage with said plurality of waveforms.

8. The railway vehicle drive unit according to claim 1, wherein
said rotation regulation member is composed of a plurality of inner pins held by said fixed member and circumferentially arranged in fixed positions around a rotation axis of said input side rotation member, and
said revolution member has a plurality of holes each having a diameter larger than an outer diameter of said inner pin by a predetermined amount, and receiving said inner pins.

9. The railway vehicle drive unit according to claim 1, further comprising a fixed member arranged in said reducer housing, and fixed and connected to a vehicle body, wherein
said revolution member has a radially extending oil path.

10. The railway vehicle drive unit according to claim 9, wherein
said rotation regulation member is composed of a plurality of inner pins held by the fixed member and circumferentially arranged in fixed positions around a rotation axis of said input side rotation member,
said revolution member has a plurality of holes each having a diameter larger than an outer diameter of said inner pin by a predetermined amount, and receiving said inner pins, and
said oil path is provided so as to pass through said hole.

11. The railway vehicle drive unit according to claim 9, wherein
said revolution member has a plurality of waveforms composed of a trocoidal curve around its periphery, and
an end of said oil path on the radial outer side is positioned in a valley part of said waveform.

12. The railway vehicle drive unit according to claim 9, wherein
said revolution member further has a lubricant oil holding space to hold a lubricant oil temporarily, in the middle of said oil path.

13. The railway vehicle drive unit according to claim 9, wherein
a diameter of an opening part of said oil path at a radial inner side end is different from a diameter of an opening part thereof at a radial outer side end.

14. The railway vehicle drive unit according to claim 9, further comprising
an axis oil path axially extending in said input side rotation member;
a lubricant oil supply port extending from said axis oil path toward an outer diameter surface of said input side rotation member;
a lubricant oil discharge port provided in said fixed member; and
a circulation oil path connecting said lubricant oil discharge port and said axis oil path, to return the lubricant oil discharged from said lubricant oil discharge port to said axis oil path.

15. The railway vehicle drive unit according to claim 9, wherein
said reducer housing has a space sealed with a lubricant oil, and said reducing mechanism is arranged in said space in such a manner that at least one part of it is soaked in the lubricant oil.

16. The railway vehicle drive unit according to claim 1, further comprising a fixed member arranged in said reducer housing, and fixed and connected to a vehicle body, wherein
at least one of said rotation regulation member and said periphery engagement member is rotatably supported by a bearing in a contact position with said revolution member, and
said bearing has a radially penetrating through hole.

17. The railway vehicle drive unit according to claim 16, wherein
said through hole is provided in a contact position with said revolution member.

18. The railway vehicle drive unit according to claim 16, wherein
said eccentric part includes first and second eccentric parts arranged in said input side rotation member with their phases shifted to offset centrifugal force due to eccentric motion, and
said revolution member includes first and second revolution members rotatably held by said first and second eccentric parts, respectively.

19. The railway vehicle drive unit according to claim 18, wherein
said bearing extends so as to abut on both of said first and second revolution members, and
said through hole is provided in a position between said first and second revolution members.

20. The railway vehicle drive unit according to claim 16, wherein
at least one of said rotation regulation member and said periphery engagement member internally has a lubricant oil holding space, and a through hole radially extending from said lubricant oil holding space.

21. The railway vehicle drive unit according to claim 16, wherein
said revolution member has a radially extending oil path.

22. The railway vehicle drive unit according to claim 16, further comprising:
an axis oil path axially extending in said input side rotation member;
a lubricant oil supply port extending from said axis oil path toward an outer diameter surface of said input side rotation member;
a lubricant oil discharge port provided in said fixed member; and
a circulation oil path connecting said lubricant oil discharge port and said axis oil path, to return the lubricant oil discharged from said lubricant oil discharge port to said axis oil path.

23. The railway vehicle drive unit according to claim 16, wherein
said reducer housing has a space sealed with a lubricant oil, and said reducing mechanism is arranged in said space .in such a manner that at least one part of it is soaked in the lubricant oil.

24. The railway vehicle drive unit according to claim 1, further comprising a fixed member arranged in said reducer housing, and fixed and connected to a vehicle body, wherein
at least one of said rotation regulation member and said periphery engagement member internally has a lubricant oil holding space, and a through hole radially extending from said lubricant oil holding space.

25. The railway vehicle drive unit according to claim 24, wherein
said oil holding space stores a porous material impregnated with the lubricant oil.

26. The railway vehicle drive unit according to claim 25, wherein
said porous material includes either one of sintered metal and foamed grease.

27. The railway vehicle drive unit according to claim 24, wherein
said revolution member has a radially extending oil path.

28. The railway vehicle drive unit according to claim 24, wherein
said rotation regulation member and said periphery engagement member are each rotatably supported by a bearing in a contact position with said revolution member, and
at least one of said revolution member and said bearing is made of sintered metal.

29. The railway vehicle drive unit according to claim 24, further comprising:
an axis oil path axially extending in said input side rotation member;
a lubricant oil supply port extending from said axis oil path toward an outer diameter surface of said input side rotation member;
a lubricant oil discharge port provided in said fixed member; and
a circulation oil path connecting said lubricant oil discharge port and said axis oil path, to return the lubricant oil discharged from said lubricant oil discharge port to said axis oil path.

30. The railway vehicle drive unit according to claim 24, wherein
said reducer housing has a space sealed with a lubricant oil, and said reducing mechanism is arranged in said space in such a manner that at least one part of it is soaked in the lubricant oil.
